(19) Europäisches Patentamt
European Patent Office
Office européen des brevets

(11) **EP 4 495 694 A1**

(12) **EUROPEAN PATENT APPLICATION**

(43) Date of publication:
22.01.2025 Bulletin 2025/04

(21) Application number: 24184901.7

(22) Date of filing: 27.06.2024

(51) International Patent Classification (IPC):
*G03G 9/087* (2006.01)

(52) Cooperative Patent Classification (CPC):
G03G 9/08782; G03G 9/08711; G03G 9/08755;
G03G 9/08795; G03G 9/08797

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.06.2023 JP 2023107004
05.06.2024 JP 2024091784

(71) Applicant: CANON KABUSHIKI KAISHA
Tokyo 146-8501 (JP)

(72) Inventors:
• SUGITANI, Yosuke
Tokyo, 146-8501 (JP)
• TANAKA, Masatake
Tokyo, 146-8501 (JP)
• KOTOTANI, Shohei
Tokyo, 146-8501 (JP)

(74) Representative: TBK
Bavariaring 4-6
80336 München (DE)

(54) **ADHESION METHOD, TONER SET AND ADHESION APPARATUS**

(57) An adhesion method includes forming, on sheets, a pattern resulting from superimposing a layer of a first toner and a layer of a second toner, in this order, and heating the pattern in a state where the sheets overlap each other such that the layers of the second toner are in contact with each other, to thereby bond the sheets, wherein calorific value H1 (J/g) of the first toner and a calorific value H2 (J/g) of the second toner, in a range from 35°C to 75°C, of an exothermic peak in a DSC curve of differential scanning calorimetry of the toner, obtained through cooling after warming up to 180°C, satisfy Expressions (1) and (2) below.

$$6.0 \leq H2 \leq 24.0 \dots \quad (1)$$

$$H1 < H2 \dots \quad (2)$$

Fig.1

EP 4 495 694 A1

**Description**

BACKGROUND OF THE INVENTION

Field of the Invention

The present disclosure relates to an adhesion method, a toner set and an adhesion apparatus that are used to produce adhered printed matters by using an electrophotographic method and the like.

Description of the Related Art

Conventional techniques have been disclosed in which a pattern of a powder adhesive (hereinafter simply referred to as "toner") is formed on a sheet which is an adherent, by using an image forming apparatus such as a printer or copier, followed by an adhesion process relying on stacking of such sheets, to process the sheets into a paper bag. In addition, a technique has been disclosed in which a sheet bundle which is a stack of a plurality of sheets is subjected to an adhesion process, to thereby obtain a booklet, in a booklet production apparatus that is a post-processing apparatus. In a case where such a booklet production apparatus is equipped in an image forming apparatus in which color images are formed using toner of multiple colors, the toner that is used to form a toner layer for an adhesion is ordinarily specified, beforehand, to one given color.

However, when forming a toner layer for adhesion using only toner of one color, the amount of adhesion toner that is consumed is accordingly larger than those of toners of other colors. Therefore, for instance Japanese Patent Laid-Open No. 2004-209858 proposes a configuration in which a toner layer for adhesion is formed using a plurality of toners in an image forming apparatus for forming color images, for the purpose of precluding increases in the consumption amount of a specific toner.

SUMMARY OF THE INVENTION

However, as the result of diligent study, the inventors have found that in a case where a toner layer for adhesion is formed using a plurality of toners in the production of a booklet as described above, in some instances the adhesion strength of the produced booklet may be insufficient depending on the physical properties of the toners and the laying sequence of the toner layers. In addition, a phenomenon (hot offset) may occur in which an image portion melts such that part thereof migrates onto a fixing unit, depending on the laying sequence of the toner layers that affords sufficient adhesion strength of the booklet. Therefore, there is a problem that it is difficult to achieve both high adhesion strength and hot offset resistance.

The present disclosure is directed to provide an adhesion method, a toner set, and an adhesion apparatus that afford both excellent adhesion strength and hot offset resistance, even when an image pattern for adhesion is formed relying on a plurality of toner layers.

The present invention in its first aspect provides an adhesion method as specified in claims 1 to 6.

The present invention in its another aspect provides a toner set as specified in claims 7 to 10.

The present invention in its another aspect provides an adhesion apparatus as specified in claim 11.

The present invention in its another aspect provides a method for producing an adhered product as specified in claim 12.

The present invention in its another aspect provides an adhesion method as specified in claim 13.

According to the present disclosure, it is capable to provide an adhesion method, a toner set, and an adhesion apparatus that afford both excellent adhesion strength and hot offset resistance, even when an image pattern for adhesion is formed relying on a plurality of toner layers.

Further features of the present invention will become apparent from the following description of exemplary embodiments with reference to the attached drawings.

BRIEF DESCRIPTION OF THE DRAWINGS

FIG. 1 is a schematic diagram of an adhesion apparatus (image forming apparatus);

FIGS. 2A, to 2D are diagrams for explaining a sheet alignment method;

FIGS. 3A to 3C are diagrams for explaining a thermocompression adhesion unit;

FIGS. 4A and 4B are schematic diagrams illustrating an example of an image pattern for adhesion;

FIGS. 5A and 5B are diagram for explaining a method for evaluating adhesion strength of booklet; and

FIG. 6 is a diagram for explaining an image pattern for adhesion.

DESCRIPTION OF THE EMBODIMENTS

The present disclosure is described in detail below, but the present disclosure is not limited to the following explanation. In the present disclosure, the expression of "from XX to YY" or "XX to YY" indicating a numerical range means a numerical range including a lower limit and an upper limit which are end points, unless otherwise specified. Also, when a numerical range is described in a stepwise manner, the upper and lower limits of each numerical range can be arbitrarily combined.

The adhesion method of the present disclosure is an adhesion method comprising:

a step of forming a first unfixed toner layer using a first toner, on a first surface of a sheet;
a step of forming a second unfixed toner layer using a second toner, on the first unfixed toner layer;
a step of forming an image pattern for adhesion on the sheet, by performing heating from a surface of the second unfixed toner layer to fix the first unfixed toner layer and the second unfixed toner layer to the sheet; and
a step of adhering the sheets to obtain an adhered product, by performing heating in a stacked configuration of the image pattern for adhesion formed on a same sheet or a different sheet, wherein
the image pattern for adhesion has, on a surface thereof, a fixed toner image derived from the second unfixed toner layer, and
when H1 (J/g) denotes a calorific value of the first toner and H2 (J/g) denotes a calorific value of the second toner, the H1 and the H2 satisfy Expressions (1) and (2) below:

$$6.0 \leq H2 \leq 24.0 \dots \quad (1)$$

$$H1 < H2 \dots \quad (2)$$

where the H1 and the H2 each are a calorific value in a range from 35°C to 75°C of an exothermic peak in a DSC curve obtained in a cooling step (ii) below, upon execution of:

(i) a temperature raising step of raising a temperature from 20°C to 180°C at a rate of 10°C/min, and
(ii) a cooling step of holding at 180°C for 10 minutes, followed by cooling from 180°C down to 20°C at a rate of 10°C/min.

The inventors found that the above structure allows combining sufficient adhesion strength and hot offset resistance. The inventors surmise the following as regards the underlying reasons for this.

A calorific value in the range from 35°C to 75°C in differential scanning calorimetry (DSC) of the toner corresponds to the amount of crystalline components such as wax and a crystalline polyester resin that precipitate on the surface of the toner during a fixing process. Therefore, the calorific value H2 (J/g) is considered to correspond to the amount of crystalline components precipitated on the surface of the second toner in the fixing process. An instance will be described in which the toner comprises a wax as a crystalline component. The larger the value H2, the hot offset resistance is improved more, through the release action of the wax that precipitates on the surface of a second toner layer. Hot offset resistance can be enhanced by setting H2 to be 6.0 J/g or more. In a case where H2 is less than 6.0 J/g, the hot offset resistance is insufficient due to the deficiency of wax precipitation.

On the other hand, the smaller the value of H2, the adhesion strength is greater in an adhesion process in which an image pattern for adhesion having on the surface a fixed toner image by a second toner, after a fixing process. This is because adhesion inhibition by the wax that precipitates on the surface of the image pattern for adhesion can be suppressed. Sufficient adhesion strength can be obtained by setting H2 to be 24.0 J/g or less. In a case where H2 exceeds 24.0 J/g, the adhesion inhibiting effect of the wax is more pronounced, which makes it difficult to achieve sufficient adhesion strength.

However, studies by the inventors have revealed the difficulty of achieving both hot offset resistance and adhesion strength just by controlling H2 as described above. The inventors have found that both hot offset resistance and adhesion strength can be achieved by prescribing that a calorific value H1 (J/g) of the first toner by differential scanning calorimetry (DSC) is to be smaller than H2, i.e. by prescribing that Expression (2) above be satisfied.

Normally, in an unmelted toner, wax is present in unevenly distributed state in the interior of the toner particle, on account of difference in the values of crystallinity of the wax and of the binder resin comprised in the toner particle. The toner becomes sufficiently melted in a fixing process (process for forming an image pattern for adhesion) and in an adhesion process (process of obtaining an adhered product). As a result, the melted wax can move freely within the melted binder resin. At the time of fixing, the wax which can now move freely in the binder resin exudes onto the surface of a fixed image (image pattern for adhesion), and as a result, separation between the fixed image and a fixing unit is achieved..

On the other hand, in the adhesion process performed after the fixing process, heating is performed in a state where the surfaces of image patterns for adhesion are superimposed on each other. Given that the image pattern for adhesion to be superimposed have a high wax concentration on the surface, and there is hence a significant local rise in wax concentration at the superposition portion. It is deemed that the wax having melted at that time diffuses away from the superposition portion (adhered portion) towards the sheet side, so that the concentration gradient becomes smaller.

Therefore, it is considered that in a case where H1 is smaller than H2 the wax that was unevenly distributed at the surface of the image pattern for adhesion moves towards the sheet side, in the adhesion process. Due to this action, the biased presence of the wax towards the adhesion surface (the portion wherein the image patterns for adhesion are superimposed on each other) is mitigated, which translates into enhanced adhesion strength. Both hot offset resistance and adhesion strength can be achieved as a result.

The inventors surmise the following concerning the underlying reasons for why the behavior of the wax differs between the fixing process and the adhesion process. In the fixing process the wax is heated from the surface of the second unfixed toner layer, and only for a short period of several milliseconds while passing through the fixing unit, such that the wax, having been thus rendered movable through melting, moves readily towards the heat source i.e. onto the surface of the image pattern for adhesion. On the other hand, in the adhesion process, the image pattern for adhesion is heated via the sheet, and accordingly the heat source lies on the sheet side. As will be described further on, the heating time in the adhesion process is about 2 seconds, which is longer than the fixing process, as is the time during which the wax remains in a molten state. It is deemed that in consequence the wax that was unevenly distributed nearer to the adhesion surface moves towards the sheet side so that the above bias is mitigated.

The difference between H2 and H1 (H2-H1) is preferably 1.5 J/g or more. Preferably, H2-H1 is 1.5 to 23.5 J/g, and more preferably 5.0 to 20.0 J/g. When H2-H1 is 1.5 J/g or more, the action whereby the wax migrates towards the sheet is brought out more readily; as a result, adhesion strength is further enhanced, and hot offset resistance and adhesion strength can both be achieved to a greater degree.

Preferably, H1 is 2.0 to 18.0 J/g, more preferably 4.0 to 15.0 J/g. By prescribing H1 to be 2.0 J/g or more, the release action of the wax is brought out satisfactorily, and hot offset resistance when using the first toner alone for printing can be further enhanced. By setting H1 to be 18.0 J/g or less, wax precipitation is further suppressed, the fixing performance of the first toner and the sheet are further improved, and adhesion strength can be further enhanced.

From the viewpoint of achieving both hot offset resistance and adhesion strength to a higher degree, preferably H2 is 10.0 to 24.0 J/g, more preferably 10.0 to 21.0 J/g.

Herein H1 and H2 can be controlled by modifying for instance the amount and type of crystalline components such as the wax; for instance, the calorific value can be increased by increasing the amount of wax, and can be reduced by reducing the amount of wax.

Preferably, the first toner is a black toner comprising a carbon black. For instance, the first toner preferably comprises a toner particle, and the second toner preferably comprises a toner particle. Preferably, the toner particle in the first toner comprises carbon black. Carbon black exhibits high oil absorption, and hence in a case where the first toner is a black toner comprising carbon black, the wax of the second toner is absorbed readily by the carbon black of the first toner, upon melting of the second toner and the first toner in the adhesion process. Accordingly, the amount of wax on the surface of the second toner layer that constitutes the adhesion surface is further reduced, and adhesion strength is further enhanced.

It is preferable that when the first toner and the second toner comprise a hydrocarbon wax, such that a content W1 (parts by mass) of hydrocarbon wax per 100 parts by mass of a binder resin or polymerizable monomer in the first toner, and a content W2 (parts by mass) of hydrocarbon wax per 100 parts by mass of a binder resin or polymerizable monomer in the second toner, satisfy Expressions (3) and (4) below. By satisfying above, better compatibility between hot offset resistance and adhesion strength can be achieved.

$$5.8 \leq W2 \leq 13.1 \dots \quad (3)$$

$$W1 < W2 \dots \quad (4)$$

The greater the value of W2, the more pronounced is the release action of the hydrocarbon wax, which translates into greater hot offset resistance. Hot offset resistance can be enhanced by setting W2 to be 5.8 parts by mass or more.

The difference between W2 and W1 (W2-W1) is preferably 0.5 parts by mass or more. More preferably, W2-W1 is 0.5 to 9.7 parts by mass, and yet more preferably 2.1 to 8.1 parts by mass. When W2-W1 is 0.5 parts by mass or more, the action whereby the hydrocarbon wax migrates towards the sheet is brought out yet more readily and accordingly adhesion strength is further enhanced, and hot offset resistance and adhesion strength can both be achieved to a greater degree.

Preferably, W1 is 4.0 to 10.7 parts by mass, more preferably 5.0 to 9.4 parts by mass. By setting W1 to 4.0 parts by mass or more, the release action of the hydrocarbon wax is brought out satisfactorily and the hot offset resistance when using the first toner alone for printing can be further enhanced. By setting W1 to 10.7 parts by mass or less, wax precipitation is further suppressed, the fixing performance of the first toner and the sheet are further improved, and adhesion strength can be further enhanced.

From the viewpoint of achieving both hot offset resistance and adhesion strength to a higher degree, W2 is preferably 7.1 to 13.1 parts by mass, more preferably 7.1 to 11.2 parts by mass.

Preferred embodiments pertaining to the toner will be explained below, but the present disclosure is not limited to the following preferred embodiments. Preferably, the first toner and the second toner comprise a toner particle and an external additive.

The toner particle may comprise a binder resin. The binder resin is not particularly limited, and any known binder resin can be used herein. For instance homopolymers of aromatic vinyl compounds and substituted products thereof, such as polystyrene and polyvinyltoluene; copolymers of aromatic vinyl compounds such as styrene-propylene copolymers, styrene-vinyltoluene copolymers, styrene-vinylnaphthalene copolymers, styrene-methyl acrylate copolymers, styrene-ethyl acrylate copolymers, styrene-butyl acrylate copolymers, styrene-octyl acrylate copolymers, styrene-dimethylaminoethyl acrylate copolymers, styrene-methyl methacrylate copolymers, styrene-ethyl methacrylate copolymers, styrene-butyl methacrylate copolymers, styrene-dimethylaminoethyl methacrylate copolymers, styrene-vinyl methyl ether copolymers, styrene-vinylethyl ether copolymers, styrene-vinyl methyl ketone copolymers, styrene-butadiene copolymers, styrene-isoprene copolymers, styrene-maleic acid copolymers and styrene-maleate ester copolymers; homopolymers of aliphatic vinyl compounds and substituted products thereof such as polyethylene and polypropylene; vinyl resins such as polyvinyl acetate, polyvinyl propionate, polyvinyl benzoate, polyvinyl butyrate, polyvinyl benzoate, polyvinyl formate and polyvinyl butyral; vinyl ether resins; vinyl ketone resins; acrylic polymers; methacrylic polymers; silicone resins; polyester resins; polyamide resins; epoxy resins; phenolic resins; as well as rosin, modified rosin and terpene resins. The foregoing can be used singly or in combinations of two or more types.

Preferably, the binder resin comprises a copolymer of an aromatic vinyl compound. Among the foregoing, the binder resin more preferably comprises a styrene acrylic resin such as a styrene-methyl acrylate copolymer, a styrene-ethyl acrylate copolymer, a styrene-butyl acrylate copolymer, a styrene-octyl acrylate copolymer, a styrene-dimethylaminoethyl acrylate copolymer, a styrene-methyl methacrylate copolymer, a styrene-ethyl methacrylate copolymer, a styrene-butyl methacrylate copolymer or a styrene-dimethylaminoethyl methacrylate copolymer, and still more preferably includes a Styrene-butyl acrylate copolymer.

Examples of polymerizable monomer that form copolymers of aromatic vinyl compounds include the following.

Styrene and derivatives thereof such as styrene, $\alpha$-methylstyrene, $\beta$-methylstyrene, o-methylstyrene, m-methylstyrene, p-methylstyrene, 2,4-dimethylstyrene, p-n-butylstyrene, p-tert-butylstyrene, p-n-hexylstyrene, p-n-octylstyrene, p-n-nonylstyrene, p-n-decylstyrene, p-n-dodecylstyrene, p-methoxystyrene, and p-phenylstyrene.

Examples of polymerizable monomers that form acrylic polymers include acrylic acid, methyl acrylate, ethyl acrylate, n-propyl acrylate, iso-propyl acrylate, n-butyl acrylate, iso-butyl acrylate, tert-butyl acrylate, n-amyl acrylate, n-hexyl acrylate, 2-ethylhexyl acrylate, n-octyl acrylate, n-nonyl acrylate, cyclohexyl acrylate, benzyl acrylate, dimethyl phosphate ethyl acrylate, diethyl phosphate ethyl acrylate, dibutyl phosphate ethyl acrylate and 2-benzoyl oxyethyl acrylate.

Examples of polymerizable monomers that form methacrylic polymers include methacrylic acid, methyl methacrylate, ethyl methacrylate, n-propyl methacrylate, iso-propyl methacrylate, n-butyl methacrylate, iso-butyl methacrylate, tert-butyl methacrylate, n-amyl methacrylate, n-hexyl methacrylate, 2-ethylhexyl methacrylate, n-octyl methacrylate, n-nonyl methacrylate, diethyl phosphate ethyl methacrylate and dibutyl phosphate ethyl methacrylate, i.e., methacrylic polymerizable monomers.

Condensation polymers of the carboxylic acid components and the alcohol components listed below can be used as a polyester resin. Examples of the carboxylic acid component include terephthalic acid, isophthalic acid, phthalic acid, fumaric acid, maleic acid, cyclohexanedicarboxylic acid and trimellitic acid. Examples of the alcohol component include bisphenol A, hydrogenated bisphenol, ethylene oxide adducts of bisphenol A, propylene oxide adducts of bisphenol A, glycerin, trimethylolpropane and pentaerythritol.

The polyester resin may be a polyester resin comprising urea groups. Carboxy groups in the polyester resin, such as those at the termini are preferably not capped (substituted by other substituents). For instance, the binder resin may comprise a polyester resin in addition to a copolymer of an aromatic vinyl compound. The content ratio of the aromatic vinyl compound copolymer in the binder resin is preferably 50 to 100 mass%, more preferably from 80 to 99 mass%, and yet more preferably 90 to 98 mass%.

The method for producing the polymer is not particularly limited, and any known method can be resorted to.

Waxes will be explained next. Preferably, the first toner and the second toner comprise a wax. The wax is not particularly limited, and examples thereof include the following.

Hydrocarbon waxes and derivatives thereof, such as low molecular weight polyethylene, low molecular weight polypropylene, microcrystalline wax, Fischer-Tropsch wax and paraffin wax; oxides of aliphatic hydrocarbon waxes such as oxidized polyethylene wax, or block copolymers thereof; waxes having fatty acid esters as main components, such as carnauba wax and montanate ester waxes; partially or fully deoxidized fatty acid esters, such as deoxidized carnauba wax; saturated linear fatty acids such as palmitic acid, stearic acid and montanic acid; unsaturated fatty acids such as brassidic acid, eleostearic acid and parinaric acid; saturated alcohols such as stearyl alcohol, arachidyl alcohol, behenyl alcohol, carnaubyl alcohol, seryl alcohol and melissyl alcohol; polyhydric alcohols such as sorbitol; fatty acid amides such as linoleamide, oleamide and lauramide; saturated fatty acid bisamides such as methylene bis(stearamide), ethylene bis(capramide), ethylene bis(lauramide) and hexamethylene bis(stearamide); unsaturated fatty acid amides such as ethylene bis(oleamide), hexamethylene bis(oleamide), N,N'-dioleyladipamide and N,N'-dioleylsebacamide; aromatic bisamides such as m-xylene bis(stearamide) and N,N'-distearyl isophthalamide; fatty acid metal salts (generally referred to as metal soaps) such as calcium stearate, calcium laurate, zinc stearate and magnesium stearate; aliphatic hydrocarbon waxes grafted with vinylic monomers such as styrene and acrylic acid; partially esterified products of fatty acids and polyhydric alcohols such as behenic acid monoglyceride; and methyl ester compounds having hydroxyl groups and obtained through hydrogenation of for instance plant-based oils and fats. The above waxes may be used singly or in combinations of two or more types.

Preferably, the wax comprises a hydrocarbon wax. For instance, H1 and H2 are calorific values of exothermic peaks corresponding to wax (preferably a hydrocarbon wax). Hydrocarbon waxes are for instance release agents. In addition to the hydrocarbon wax, the wax may further comprise an ester wax as a plasticizer.

Examples of aliphatic alcohols that form ester waxes include 1-hexanol, 1-heptanol, 1-octanol, 1-nonanol, 1-decanol, undecyl alcohol, lauryl alcohol, myristyl alcohol, 1-hexadecanol, stearyl alcohol, arachidyl alcohol, behenyl alcohol, lignoceryl alcohol and ethylene glycol.

Examples of aliphatic carboxylic acids that form ester waxes include pentanoic acid, hexanoic acid, heptanoic acid, octanoic acid, nonanoic acid, decanoic acid, lauric acid, myristic acid, palmitic acid, stearic acid, arachidic acid, behenic acid and lignoceric acid.

The wax content is preferably 0.5 to 30.0 parts by mass relative to 100 parts by mass of binder resin or polymerizable monomers.

For instance, the content of ester wax in the first toner and the second toner is preferably 5.0 to 25.0 parts by mass, more preferably 10.0 to 20.0 parts by mass, relative to 100 parts by mass of binder resin or polymerizable monomers.

A colorant will be addressed next.

The toner particle may also comprise a colorant. In particular, a powder adhesive can be used also as an ordinary printing toner by using a colorant in the powder adhesive.

The colorant is not particularly limited, and for instance the following known colorants can be used.

Examples of yellow pigments include yellow iron oxide, Naples yellow, Naphthol Yellow S, condensed azo compounds such as Hansa Yellow G, Hansa Yellow 10G, Benzidine Yellow G, Benzidine Yellow GR, Quinoline Yellow Lake, Permanent Yellow NCG, and Tartrazine Lake, as well as isoindolinone compounds, anthraquinone compounds, azo metal complexes, methine compounds and allylamide compounds. Specific examples include the following.

C. I. Pigment Yellow 12, 13, 14, 15, 17, 62, 74, 83, 93, 94, 95, 109, 110, 111, 128, 129, 147, 155, 168, 180.

Examples of orange pigments include the following.

Permanent Orange GTR, Pyrazolone Orange, Balkan Orange, Benzidine Orange G, Indanthrone Brilliant Orange RK and Indanthrone Brilliant Orange GK.

Examples of red pigments include condensed azo compounds such as red iron oxide, Permanent Red 4R, Resole Red, Pyrazolone Red, Watching Red calcium salt, Lake Red C, Lake Red D, Brilliant Carmine 6B, Brilliant Carmine 3B, Eosin Lake, Rhodamine Lake B and Alizarin Lake, as well as diketopyrrolopyrrole compounds, anthraquinone compounds, quinacridone compounds, basic dye lake compounds, naphthol compounds, benzimidazolone compounds, thioindigo compounds and perylene compounds. Specific examples include the following.

C. I. Pigment Red 2, 3, 5, 6, 7, 23, 48:2, 48:3, 48:4, 57:1, 81:1, 122, 144, 146, 166, 169, 177, 184, 185, 202, 206, 220, 221, 254.

Examples of blue pigments include alkali blue lake, Victoria blue lake, copper phthalocyanine compounds and derivatives thereof such as phthalocyanine blue, metal-free phthalocyanine blue, phthalocyanine blue partial chloride, Fast Sky Blue and Indanthrone Blue BG, as well as anthraquinone compounds and basic dye lake compounds. Specific examples include the following.

C. I. Pigment Blue 1, 7, 15, 15:1, 15:2, 15:3, 15:4, 60, 62, 66.

Examples of violet pigments include Fast Violet B and Methyl Violet Lake.

Examples of green pigments include Pigment Green B, Malachite Green Lake and Final Yellow Green G.

Examples of white pigments include zinc white, titanium oxide, antimony white and zinc sulfide.

Examples of black pigments include carbon black, aniline black, non-magnetic ferrite, magnetite, and pigments resulting from color matching to black using the above-described yellow colorants, red colorants and blue colorants.

These colorants can be used singly or in mixtures thereof, and also in a solid solution state.

The colorant may be surface-treated, as the case may require, with a substance that does not inhibit polymerization.

The content of the colorant is preferably 1.0 to 15.0 parts by mass relative to 100.0 parts by mass of binder resin or polymerizable monomers. In a black toner comprising carbon black, the content of carbon black is preferably 1.0 to 15.0 parts by mass, more preferably 7.0 to 15.0 parts by mass, relative to 100.0 parts by mass of binder resin or polymerizable monomers.

A charge control agent will be described next.

The toner particle may comprise a charge control agent, as needed. A known agent can be used as the charge control agent, but preferred herein is a charge control agent having a high triboelectric charging rate, and that is capable of stably maintaining a constant triboelectric charge quantity. In a case where the toner particle is produced in accordance with a polymerization method, a charge control agent is preferable that has low polymerization inhibition properties, and that forms substantially no solubilized product thereof in an aqueous medium.

The charge control agent may be a charge control agent that controls the toner so as to exhibit negative chargeability or so as to exhibit positive chargeability.

Examples of charge control agents that control toner so as to exhibit negative chargeability include the following.

Monoazo metal compounds, acetylacetone metal compounds, metal compounds of aromatic hydroxycarboxylic acids, aromatic dicarboxylic acids, hydroxycarboxylic acids and dicarboxylic acids, aromatic hydroxycarboxylic acids, aromatic mono and polycarboxylic acids, and metal salts, anhydrides, and esters thereof, phenol derivatives such as bisphenol, urea derivatives, metal-containing salicylic acid-based compounds, metal-containing naphthoic acid-based compounds, boron compounds, quaternary ammonium salts, calixarene, resin type charge control agent, and the like.

Examples of charge control agents that control toner so as to exhibit positive chargeability include the following.

Nigrosine and nigrosine modifications such as fatty acid metal salts; guanidine compounds; imidazole compounds; onium salts such as quaternary ammonium salts, for example, tributylbenzylammonium-1-hydroxy-4-naphthosulfonate and tetrabutylammonium tetrafluoroborate, phosphonium salts which are analogues thereof, and lake pigments thereof; triphenylmethane dyes and lake pigments thereof (examples of lake agents include phosphotungstic acid, phosphomolybdic acid, phosphotungsticmolybdic acid, tannic acids, gallic acid, ferricyanide, ferrocyanide, and the like); metal salts of higher fatty acid; and resin type charge control agent (charge control resin).

The above charge control agents can be used singly or in combinations of two or more types. Preferred among these charge control agents are metal-containing salicylic acid-based compounds, in particular compounds such that the metal thereof is aluminum or zirconium.

As a charge control resin there is preferably used a polymer, or copolymer, having a sulfonic acid group, a sulfonic acid base or a sulfonic acid ester group.

The addition amount of the charge control agent is preferably 0.1 to 20.0 parts by mass, more preferably 0.5 to 10.0 parts by mass, relative to 100.0 parts by mass of binder resin.

An external additive will be described next

The toner can also comprise an external additive, as needed. For instance the toner has a toner particle and an external additive. The external additive allows controlling for instance flowability, charging performance and cleaning performance.

Examples of external additives that are used include inorganic oxide fine particles such as silica fine particles, alumina fine particles and titanium oxide fine particles; inorganic stearate compound fine particles such as aluminum stearate fine particles and zinc stearate fine particles; or strontium titanate fine particles; as well as inorganic titanate compound fine particles such as zinc titanate fine particles. The external additive can be used singly or in combinations of two or more types.

The total addition amount of external additive is preferably 0.05 to 10.00 parts by mass, more preferably 0.1 to 5.0 parts by mass, relative to 100 parts by mass of the toner particle.

A known method can be resorted to for fixing the external additive to the surface of the toner particle. Examples include fixing using a Henschel mixer (dry production method), and fixing by dispersing the toner particle and the external additive in a solvent, followed by aggregation (wet production method).

A method for producing a toner particle will be explained next.

A known method can be resorted to for producing a toner particle. Examples include dry production methods such as kneading pulverization, and wet production methods such as suspension polymerization, dissolution suspension, emulsification aggregation, and emulsion polymerization aggregation. A wet production method is preferably resorted to, from the viewpoint in particular of achieving a sharp particle size distribution of the toner particle, improving the average circularity of toner particle, and forming a core-shell structure.

In a case for instance where the toner particle is produced by kneading pulverization, which is a dry production method, the binder resin and, as needed, a wax, a colorant, a charge control agent and other additives are thoroughly mixed in a Henschel mixer, a ball mill or the like. Thereafter, various materials are dispersed or dissolved by melt-kneading using heat kneading equipment such as a heated roll, a kneader, or an extruder, and the resulting product is subjected to a cooling solidification process, a pulverization process, a classification process and, as needed, a surface treatment process, to obtain a toner particle.

A known pulverization apparatus, for instance of mechanical impact type or of a jet type may be used in the pulverization process. The classification process and the surface treatment process may precede the other, in the order of processes. A multigrade classifier is preferably used in the classification process, from the viewpoint of production efficiency.

An instance will be described next in which a toner particle is produced by suspension polymerization, which is an example of a wet production method. A production example of a toner particle relying on a suspension polymerization method will be addressed next in detail, but the present disclosure is not limited thereto.

In a suspension polymerization method, firstly polymerizable monomers for producing a binder resin, and as needed a wax, a colorant, a charge control agent, a crosslinking agent, a polymerization initiator and other additives are uniformly dissolved or dispersed using dispersion equipment such as ball mill or an ultrasonic disperser, to thereby obtain a polymerizable monomer composition (step for preparing a polymerizable monomer composition).

Next, the above polymerizable monomer composition is charged into an aqueous medium prepared beforehand, and droplets made up of the polymerizable monomer composition are formed to the desired toner particle diameter, using a stirrer or disperser having high shear forces (granulating step).

Preferably, the aqueous medium in the granulating step comprises a dispersion stabilizer, for the purpose of controlling the particle diameter of the toner particle, making particle size distribution sharper, and curtailing coalescing of toner particles in the production process. Generally, dispersion stabilizers are broadly classified into polymers that bring about repulsive forces due to steric hindrance, and into poorly water-soluble inorganic compounds for dispersion stabilization by electrostatic repulsive forces. Fine particles of poorly water-soluble inorganic compounds are dissolved by acids and alkalis. Such fine particles are therefore preferably used, since the particles can be easily removed by being dissolved through washing with an acid or alkali after polymerization.

Preferably, a dispersion stabilizer comprising any one from among magnesium, calcium, barium, zinc, aluminum and phosphorus can be used herein as the dispersion stabilizer of a poorly water-soluble inorganic compound. More preferably, the dispersion stabilizer comprises any one from among magnesium, calcium, aluminum and phosphorus. Specific examples include the following.

Magnesium phosphate, tricalcium phosphate, aluminum phosphate, zinc phosphate, magnesium carbonate, calcium carbonate, magnesium hydroxide, calcium hydroxide, aluminum hydroxide, calcium metasilicate, calcium sulfate, barium sulfate and hydroxyapatide.

When using a poorly water-soluble inorganic dispersing agent, that agent may be used as-is, but can also be used to generate inorganic dispersing agent particles in an aqueous medium, in order to obtain finer particles. In the case for instance of tricalcium phosphate, water-insoluble tricalcium phosphate can be produced by mixing an aqueous solution of sodium phosphate and an aqueous solution of calcium chloride while under high-speed stirring; doing so allows obtaining a more uniform fine dispersion.

Organic compounds such as polyvinyl alcohol, gelatin, methylcellulose, methylhydroxypropylcellulose, ethylcellulose, sodium salts of carboxymethylcellulose and starch may be used concomitantly in the above dispersion stabilizer.

The dispersion stabilizer is used in an amount of 0.1 to 20.0 parts by mass relative to 100 parts by mass of polymerizable monomer.

To make the dispersion stabilizer yet finer there may be used concomitantly 0.1 to 10.0 parts by mass of a surfactant relative to 100 parts by mass of the polymerizable monomer. Specifically, there can be used commercially available nonionic, anionic and cationic surfactants. For instance sodium dodecyl sulfate, sodium tetradecyl sulfate, sodium pentadecyl sulfate, sodium octyl sulfate, sodium oleate, sodium laurate, potassium stearate or calcium oleate are preferably used herein.

After or during the granulating step, the temperature is preferably set to a temperature of 50 to 90°C, and the polymerizable monomer included in the polymerizable monomer composition is then polymerized, to obtain a toner particle dispersion (polymerization step).

In the polymerization step a stirring operation is preferably carried out so that the temperature distribution in a vessel becomes uniform. In a case where a polymerization initiator is to be added, this can be accomplished at an arbitrary timing and over a required lapse of time. For the purpose of achieving a desired molecular weight distribution, the temperature may be raised in the latter half of the polymerization reaction, and in order to remove unreacted polymerizable monomer, byproducts and the like out of the system, part of the aqueous medium may be distilled off in a distillation operation, in the latter half of the reaction or once the reaction is over. The distillation operation can be carried out under normal pressure or under reduced pressure.

Preferably, the polymerization initiator used in a suspension polymerization method has a half-life of 0.5 hours to 30 hours at the time of the polymerization reaction. A polymer having at most a weight-average molecular weight between 5000 and 50000 can be obtained as a result of a polymerization reaction using 0.5 to 20.0 parts by mass of polymerization initiator added, relative to 100 parts by mass of the polymerizable monomer.

An oil-soluble initiator is generally used as the polymerization initiator. Examples include for instance the following.

Azo compounds such as 2,2'-azobisisobutyronitrile, 2,2'-azobis-2,4-dimethylvaleronitrile, 1,1'-azobis(cyclohexane-1-carbonitrile), 2,2'-azobis-4-methoxy-2,4-dimethylvaleronitrile and the like; and peroxide-based initiators such as acetylcyclohexylsulfonyl peroxide, diisopropyl peroxycarbonate, decanoyyl peroxide, lauroyl peroxide, stearoyl peroxide, propionyl peroxide, acetyl peroxide, tert-butylperoxy-2-ethylhexanoate, benzoyl peroxide, tert-butylperoxyisobutyrate, cyclohexanone peroxide, methyl ethyl ketone peroxide, dicumyl peroxide, tert-butylhydroperoxide, di-tert-butyl peroxide, tert-butylperoxypivalate and cumene hydroperoxide.

As needed, the polymerization initiator may be used concomitantly with a water-soluble initiator, examples whereof include the following.

Ammonium persulfate, potassium persulfate, 2,2'-azobis(N,N'-dimethyleneisobutyramidine) hydrochloride, 2,2'-azobis(2-aminodinopropane) hydrochloride, azobis(isobutyramidine) hydrochloride, sodium 2,2'-azobisisobutyronitrile sulfonate, ferrous sulfate and hydrogen peroxide.

These polymerization initiators can be used singly or in combinations of two or more types; also, a chain transfer agent, a polymerization inhibitor or the like can be further added and used for the purpose of controlling the degree of polymerization of the polymerizable monomer.

The weight-average particle diameter of the toner particle is preferably 3.0 to 10.0 $\mu$m, from the viewpoint of achieving high-definition and high-resolution images. The weight-average particle diameter of the toner particle and the toner can be measured in accordance with a pore electrical resistance method. For instance the weight-average particle diameter can be measured using "Coulter Counter Multi sizer 3" (by Beckman Coulter, Inc.).

After the polymerization step, the toner particle dispersion is fed to a filtration process for solid-liquid separation of the toner particle and the aqueous medium.

Solid-liquid separation for obtaining a toner particle from the obtained toner particle dispersion can be carried out in accordance with a general filtration method; preferably, further washing for instance by washing using a re-slurry or washing water is performed thereafter, in order to remove foreign matter not having been removed from the toner particle surface. After sufficient washing, solid-liquid separation is performed again, to obtain a toner cake. A toner particle is obtained thereafter through drying using a known drying means, and by classifying, as needed, to separate particles having a particle diameter other than a predetermined one. The separated particles having a particle diameter other than a predetermined one may be reused for the purpose of improving a final obtain.

A developer will be described next.

The toner can be used as a magnetic or non-magnetic one-component developer, but may be used as a two-component developer by being mixed with a carrier.

As the carrier there can be used magnetic particles made up of known materials, for instance metals such as iron, ferrite or magnetite, and alloys of these metals with metals such as aluminum or lead. Ferrite particles are preferably used among the foregoing. For instance, a coated carrier in which the surface of magnetic particles is coated with a coating agent such as a resin, or a resin dispersion-type carrier resulting from dispersing a magnetic fine powder in a binder resin, may be used as the carrier.

The carrier preferably has a volume-average particle diameter of 15 to 100 $\mu$m, more preferably 25 to 80 $\mu$m.

An adhesion method will be described next.

For instance pattern formation can be accomplished electrophotographically using toner as a powder adhesive. A toner image can be formed on a sheet by charging the toner, developing a potential-drawn latent image using a toner, and electrostatically transferring the developed image onto the sheet as an adherend. Sheets can thereupon be adhered together by superimposing the toner images, with heating. Images can also be printed within the sheet using a toner.

The adhesion method includes the following steps.

(1) A step of forming a first unfixed toner layer using a first toner, on a first surface of a sheet.
(2) A step of forming a second unfixed toner layer using a second toner, on the first unfixed toner layer.
(3) A step of forming an image pattern for adhesion on the sheet, by performing heating from a surface of the second unfixed toner layer to fix the first unfixed toner layer and the second unfixed toner layer to the sheet.
(4) A step of adhering the sheets to obtain an adhered product, by performing heating in a stacked configuration of the image pattern for adhesion formed on a same sheet or a different sheet.

An image pattern for adhesion created in an adhesion process has, on the surface, a fixed toner image derived from a second unfixed toner layer.

The present disclosure also relates to a toner set that is used in the above-described adhesion method. The toner set has the above-described first toner and second toner, separately. The present disclosure may also provide a cartridge set. The cartridge set comprises a first process cartridge that accommodates a first toner, and a second process cartridge that accommodates a second toner.

An adhesion apparatus will be described next.

The adhesion apparatus, which stores for instance sheets of paper as an adherend, is provided with an image forming unit as an image forming means, and may have a heating device as an adhesion means. Adhesion is performed by applying heat to a stack of sheets having had a powder adhesive pattern formed thereon. Given that the adhesion apparatus is provided with an image forming unit and a heating device, an image can also be printed using a toner instead of a powder adhesive.

Adhesion Method, Adhesion Apparatus, and Operation

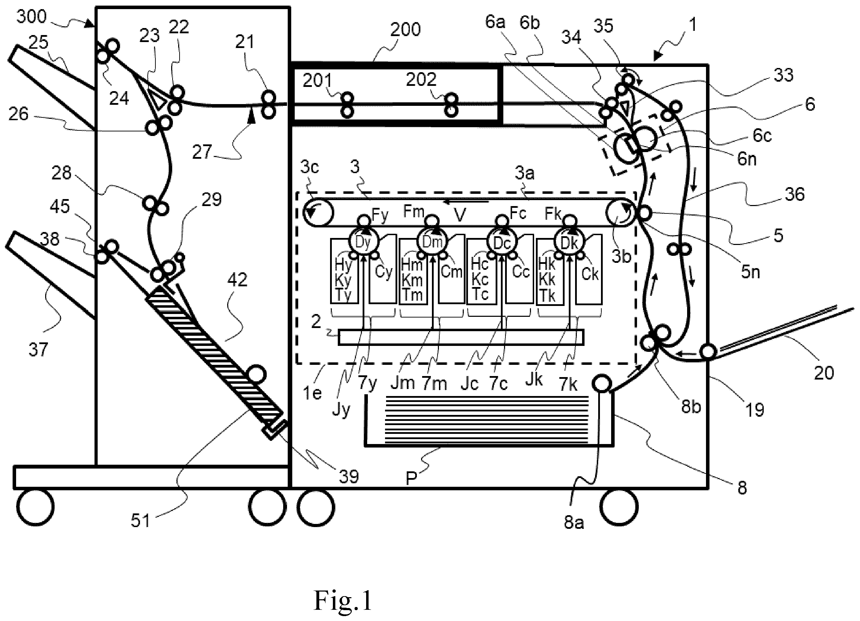

The overall configuration of the adhesion apparatus will be explained with reference to FIG. 1. FIG. 1 is a schematic diagram illustrating a cross-sectional configuration of the adhesion apparatus according to below-described examples.

As illustrated in FIG. 1, the adhesion apparatus comprises an image forming unit 1 and the post-processing unit 300. The image forming unit 1 comprises the sheet cassette 8 as a sheet accommodating section that accommodates sheets P as a recording material, the image forming section 1e as an image forming means, the fixing apparatus 6 as a fixing means, and a housing 19 that accommodates the foregoing. The adhesion apparatus has a printing function of forming a toner image, by the image forming section 1e, on a sheet P having been fed from the sheet cassette 8, and producing a printed product having undergone a fixing treatment by the fixing apparatus 6.

The size of the sheet may be modified as appropriate depending on the size of the adhesion apparatus that is used, and is not particularly limited. In the example described below, the maximum size in the transport direction that allows for image formation on the sheet P is an A4 size (297 mm long $\times$ 210 mm wide), with image forming being accomplished through transport of A4-size sheets in the vertical direction. The sheet transport speed is likewise not particularly limited, and is 300 mm/sec in the below-described examples.

The sheet cassette 8 is inserted at the bottom of the adhesion apparatus, so as to be drawable from the housing 19; herein the sheet cassette 8 accommodates multiple sheets P. The sheets P stored in the sheet cassette 8 are fed from the sheet cassette 8 by a paper feeding roller 8a as a paper feeding section, and are transported by a transport roller pair 8b. Sheets set in a multi-tray 20 may also be fed one by one.

The image forming section 1e is a tandem electrophotographic unit having four process cartridges 7y, 7m, 7c, 7k, a scanner unit 2, and a transfer unit 3. Each process cartridge is a unit in which multiple components involved in an image forming process are integrated together, so as to replaceable collectively by another unit.

The process cartridges 7y, 7m, 7c, 7k have substantially the same configuration, except for the types of toner respectively accommodated in four toner storage sections Ky, Km, Kc, Kk. Specifically, the process cartridges 7y, 7m, 7c, 7k accommodate respective photosensitive drums Dy, Dm, Dc, Dk which are image bearing members, charging rollers Cy, Cm, Cc, Ck which are charging devices, and toner storage sections Ky, Km, Kc, Kk that accommodate toner and supply that toner to a respective photosensitive drum.

The four toner storage sections Ky, Km, Kc, Kk accommodate yellow (Ty), magenta (Tm), cyan (Tc) and black (Tk) toners for forming a visible image on the sheet P. The toners for forming that visible image can also be used, in the form of a toner for adhesion, as a powder adhesive for performing an adhesion process after printing.

The scanner unit 2 is disposed below the process cartridges 7y, 7m, 7c, 7k and above the sheet cassette 8. The scanner unit 2 is an exposure means for irradiating the photosensitive drums Dy, Dm, Dc, Dk of the process cartridges 7y, 7m, 7c, 7k with laser beams Jy, Jm, Jc, Jk, to write respective electrostatic latent images on the photosensitive drums Dy, Dm, Dc, Dk.

The transfer unit 3 comprises a transfer belt 3a as an intermediate transfer member (secondary image bearing member). The transfer belt 3a is a belt member wound around a secondary transfer inner roller 3b and a tension roller 3c, such that the outer periphery of the transfer belt 3a opposes the photosensitive drums Dy, Dm, Dc, Dk of the respective process cartridges 7y, 7m, 7c, 7k. On the inner peripheral side of the transfer belt 3a there are arranged primary transfer rollers Fy, Fm, Fc, Fk, at positions corresponding to respective photosensitive drums Dy, Dm, Dc, Dk. A secondary transfer roller 5 as a transfer means is arranged at a position opposing the secondary transfer inner roller 3b. A transfer nip 5n between the secondary transfer roller 5 and the transfer belt 3a is a transfer section (secondary transfer section) at which the toner image is transferred from the transfer belt 3a to the sheet P. The fixing apparatus 6 is disposed above the secondary transfer roller 5.

The fixing apparatus 6 comprises a tubular fixing film (endless belt) 6a as a rotary heating member, and a pressing roller 6c as a pressing member. The fixing apparatus 6 further has a heater 6b as a heating means, and which comes in contact with the inner surface of the fixing film 6a, and the pressing roller 6c as a pressing rotating member that forms via the fixing film 6a the fixing nip 6n together with the heater 6b.

The operation of the image forming unit 1 will be explained next with reference back to FIG. 1. When the image forming unit 1 receives the input of image data such as an image pattern for adhesion to be printed and a print execution command, a control unit, not shown, of the adhesion apparatus prompts transport of the sheet P and initiates a series of operations (image forming operation) for forming an image on the sheet P. In the image forming operation, firstly the sheets P are fed one by one from the sheet cassette 8, and are transported towards the transfer nip 5n by way of the transport roller 8b.

In parallel with feeding of the sheets P, the process cartridges 7y, 7m, 7c, 7k are driven sequentially, to rotationally drive the photosensitive drums Dy, Dm, Dc, Dk. The surfaces of the photosensitive drums Dy, Dm, Dc, Dk become thereupon uniformly charged by the charging rollers Cy, Cm, Cc, Ck. The scanner unit 2 irradiates the photosensitive drums Dy, Dm, Dc, Dk of respective process cartridges 7y, 7m, 7c, 7k with laser light having been modulated on the basis of the image data, to thereby form respective electrostatic latent images on the surfaces of the photosensitive drums Dy, Dm, Dc, Dk. Next, the electrostatic latent images on the photosensitive drums Dy, Dm, Dc, Dk are developed as respective toner images by toners supported on developing rollers Hy, Hm, Hc, Hk within the toner storage sections Ky, Km, Kc, Kk of the process cartridges 7y, 7m, 7c, 7k.

The transfer belt 3a rotates in the counterclockwise direction (arrow V) in the figure. The toner images formed on the process cartridges 7y, 7m, 7c, 7k become primary-transferred onto the transfer belt 3a from the photosensitive drums Dy, Dm, Dc, Dk, on account of the electric fields formed between the photosensitive drums Dy, Dm, Dc, Dk and the primary transfer rollers Fy, Fm, Fc, Fk.

The resulting toner image supported on the transfer belt 3a and that has reached the transfer nip 5n is secondary-transferred onto a transported sheet P on account of the electric field formed between the secondary transfer roller 5 and the secondary transfer inner roller 3b.

In a case where the toner image formed on the sheet P after secondary transfer is to include all four color toners, the black toner Tk is disposed at the position closest to the sheet P. The cyan toner Tc is disposed on the black toner Tk, the magenta toner Tm is disposed on the cyan toner Tc, and the yellow toner Ty is disposed at a position farthest from the sheet P.

Thereafter, the sheet P is transported to the fixing apparatus 6, where it is subjected to a heat fixing treatment. Specifically, the toner image on the sheet P is heated and pressed as the sheet P passes through the fixing nip 6n, to elicit melting of the toners Ty, Tm, Tc, Tk, after which a toner layer becomes formed through solidification, and there is obtained an image such as an image pattern for adhesion fixed to the sheet P.

In the present disclosure, a first unfixed toner layer is formed using a first toner, on the first surface of the sheet, and a second unfixed toner layer is formed using a second toner, on the first unfixed toner layer, to thereby form an image pattern so that the second unfixed toner layer is the pattern surface. The formed image pattern is then fixed on the first surface of the sheet, to form an image pattern for adhesion. The first unfixed toner layer may be formed, using the first toner, also on a second surface of the sheet, on the reverse side from that of the first surface, with a second unfixed toner layer being formed, using the second toner, on the first unfixed toner layer, to form as a result an image pattern on the second surface such that the second unfixed toner layer is the pattern surface, followed by a fixing process, and thereby form an image pattern for adhesion on the sheet. That is, an image pattern for adhesion may be formed on both faces of the sheet. If the first toner and the second toner satisfy Expressions (1) and (2), for instance a further toner layer may be provided between the sheet and the first unfixed toner layer, within a range such that the effect of the present disclosure is not impaired.

The first toner may comprise toners of multiple colors, and the second toner may comprise toners of multiple colors, provided that the first toner and the second toner satisfy Expressions (1) and (2). The first toner and the second toner may be of identical color, so long as the first toner and the second toner satisfy Expressions (1) and (2).

The first toner is preferably a black toner Tk, and the second toner is preferably at least one selected from the group consisting of a cyan toner Tc, a magenta toner Tm and a yellow toner Ty. For instance the first toner may be a cyan toner Tc, and the second toner may be at least one selected from the group consisting of a magenta toner Tm and a yellow toner Ty. The first toner may be magenta toner Tm, and the second toner may be yellow toner Ty.

A switching guide 33 is a flap-like guide member for switching the transport direction in a case where there is selected either one from among a single-sided printing mode in which an image is formed on one face of the sheet P, or a double-sided printing mode in which images are formed on both faces of the sheet P. In the case of the single-sided printing mode, the switching guide 33 transports the sheet P towards a paper discharge roller pair 34.

In the case of the double-sided printing mode, by contrast, the switching guide 33 transports the sheet P towards a switchback roller pair 35, whereupon the switchback roller pair 35 reverses the rotational direction, after discharge of the discharging the sheet P up to the trailing edge of the sheet P, to thereby guide the sheet P towards a duplex transport path 36 for double-side printing. The sheet P transported on the duplex transport path 36 passes through a secondary transfer section and a fixing section again, as a result of which an image pattern for adhesion becomes formed on the second surface (unprinted sheet surface), on the reverse side from that of the first surface. Thereafter, the sheet P having an image formed thereon is transported by the switching guide 33 towards the paper discharge roller pair 34, whereupon paper discharge rollers 34 transport the sheet P to the post-processing unit 300 via an intermediate transport unit 200 having transport roller pairs 201 and 202.

The post-processing unit 300 has a floor-standing configuration, i.e. is fitted at the bottom thereof with a sheet aligning means and with a thermocompression adhesion unit 51 as an adhesion apparatus for booklet for heating and pressing the aligned sheet bundles for a predetermined time. In the below-described examples, the sheet transport speed in the intermediate transport unit 200 and the post-processing unit 300 is 600 mm/sec.

In the present disclosure a plurality of sheets having an image pattern for adhesion formed thereon are laid up on each other to obtain a sheet bundle, in such a manner that the second toner layers of the image pattern for adhesion are in contact with each other, and thereupon the image patterns for adhesion in the sheet bundle are heated (preferably heated and pressed), to thereby bond the sheets to each other and obtain a booklet. The sheets can be adhered together by the thermocompression adhesion unit 51.

Each sheet P having been transported from the intermediate transport unit 200 is handed over to a transport roller pair 21 of the post-processing unit 300. Transport rollers 22 accelerate the sheet at a predetermined timing, on the basis of the passage time of the trailing end of the sheet P, by an inlet sensor 27. In a case where in image formation in which sheets are not adhered together the sheets are discharged onto an upper paper discharge tray 25, as a discharge destination, the sheets are decelerated to a predetermined paper discharge speed, at a stage where the sheet trailing end comes between the transport rollers 22 and reversing rollers 24, and are discharged onto the upper paper discharge tray 25.

In a case where a booklet is obtained by adhering sheets to each other, the adhered booklet is discharged from a lower paper discharge tray 37 via the thermocompression adhesion unit 51. In this case sheet transport is temporarily discontinued at the timing when the sheet trailing end passes through a backflow prevention valve 23, which is urged clockwise in the figure by a spring, not shown, whereupon the sheet is switched back and transported to inner paper discharge rollers 26.

The sheet P transported from the inner paper discharge rollers 26 is fed to a kicking roller 29 via intermediate transport rollers 28, and is then transported to an intermediate stacking section 42. Longitudinal-alignment reference plates 39 are disposed at the most downstream part of the intermediate stacking section 42, such that the sheet bundle is aligned through abutting of sheet edges against the vertical-alignment reference plates 39.

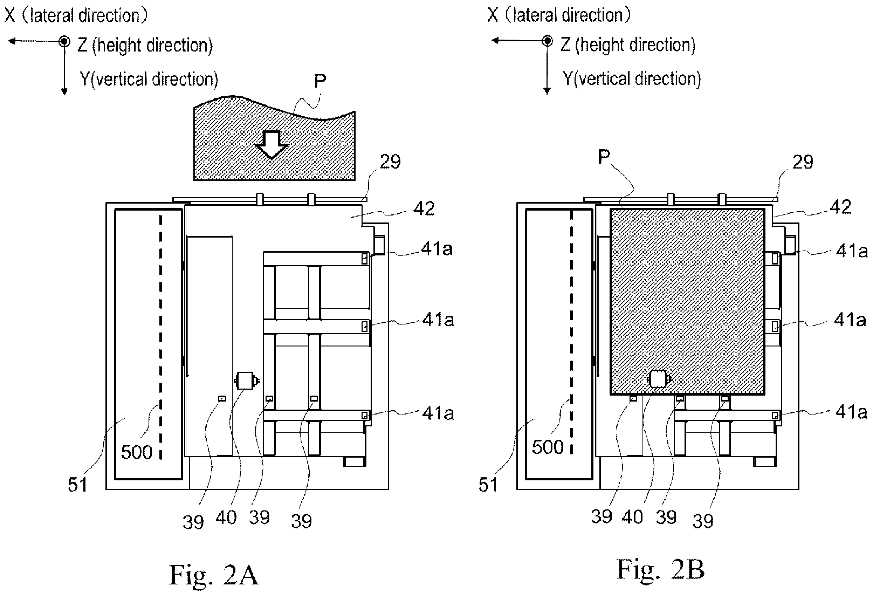

A sheet alignment method will be explained next with reference to FIG. 1 and FIGS. 2A to 2D. The vertical direction of the sheet P is defined as a Y direction, the lateral direction of the sheet P is defined as an X direction, and the height direction is defined as a Z direction. As illustrated in FIG. 2A, in the intermediate stacking section 42 there is rotatably supported a semicircular roller 40 for pushing the sheet P, having passed through the kicking roller 29, against the vertical-alignment reference plates 39. The semicircular roller 40 transports the sheet towards the vertical-alignment reference plates 39 at a predetermined timing. As illustrated in FIG. 2B, the semicircular roller 40 is adjusted to a conveying pressure such that the semicircular roller 40 slides over the sheet after the sheet abuts the vertical-alignment reference plates 39.

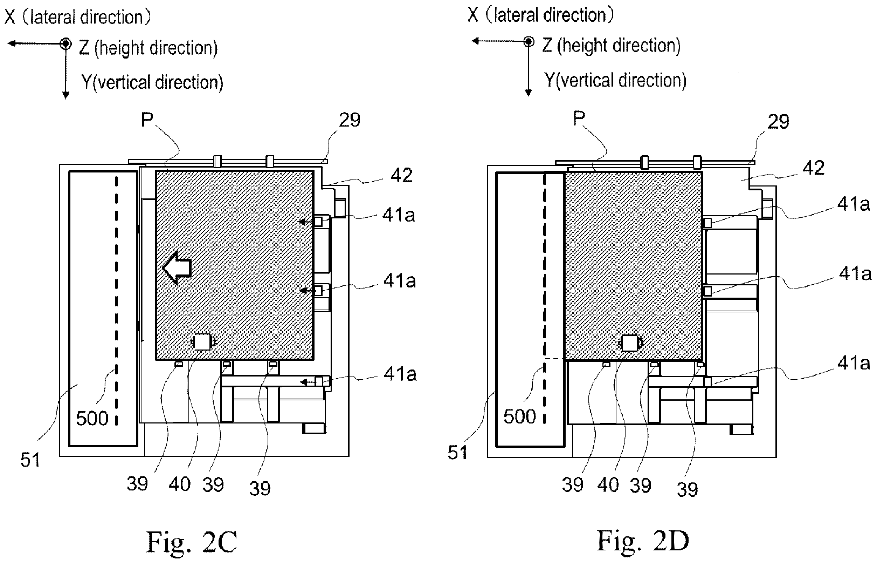

After reaching the vertical-alignment reference plate, an alignment operation is performed until lateral-alignment joggers 41a abut a lateral alignment reference plate 500 (dotted line), as illustrated in FIG. 2C, as a result of which a sheet bundle becomes aligned to a predetermined position as in FIG. 2D. The operations illustrated in FIGS. 2C and 2D are performed collectively for each predetermined number of sheets, in concert with a binding operation by the thermocompression adhesion unit 51 as a sheet adhesion means.

The thermocompression adhesion unit 51 performs thermocompression adhesion on a sheet bundle made up of a plurality of sheets P, to produce a booklet that is bound at the left edge or is bound at the right edge. The bundle of sheets aligned in the vertical direction and the lateral direction is heated and pressed by the thermocompression adhesion unit 51, as a result of which it becomes possible to produce a booklet that has been aligned with high precision.

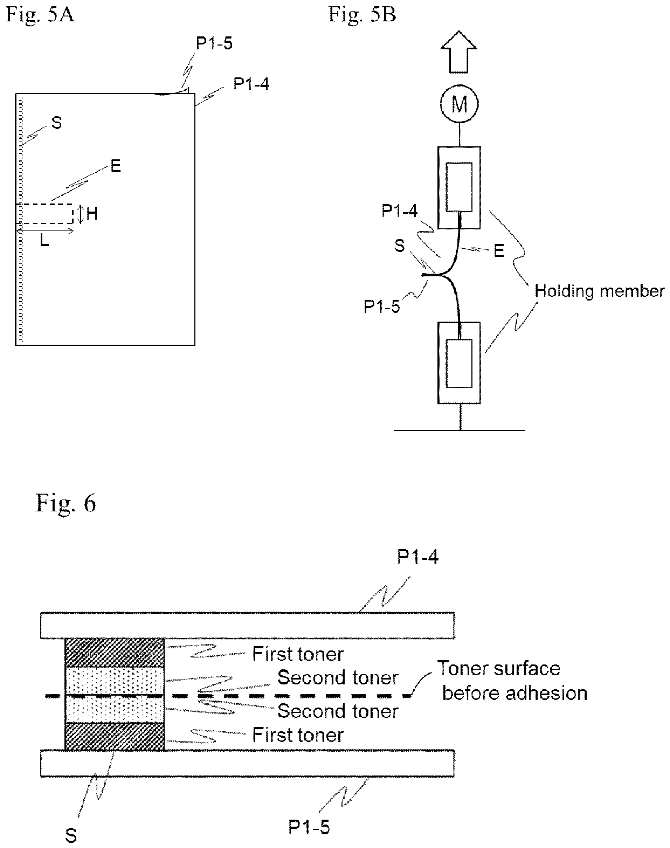

In the present disclosure the second toner layers of the image patterns for adhesion formed on a same sheet or different sheets are superimposed so as to come in contact with each other. The number of sheets may be one, two or more. It is preferable that the fixed toner image of the image pattern for adhesion formed on different sheets are superimposed so as to come in contact with each other. The sheets can be adhered to each other, to obtain a booklet, through heating of the image patterns for adhesion on the sheets. The sheets are laid up in such a manner that the second toner layers are in contact with each other, and accordingly the image pattern for adhesion which is thus a stack of the first toner layer and the second toner layer has at least two layers between sheet and sheet (FIG. 6).

For instance a sheet bundle may be obtained by overlaying a plurality of sheets each having an image pattern for adhesion formed on both the first surface and the second surface.

A sheet having an image pattern for adhesion formed on the first surface and another sheet having an image pattern for adhesion formed on the first surface may be superimposed on each other in such a manner that the second toner layers are in contact with each other. A sheet bundle can thus be produced by in the above-described double-sided printing mode. For instance a plurality of sheets, having an image pattern for adhesion formed on both faces of the sheets, are laid up, by using herein sheets that have no image pattern for adhesion formed on the surface side of the sheet bundle. The number of sheets can be set arbitrarily.

Preferably, the sheets are adhered to each other by heating the image patterns for adhesion in the sheet bundle, to obtain a booklet as a deliverable. Preferably, heating is performed from the side at which no image pattern for adhesion is formed. For instance heating may be performed from the second surface side on the back of the first surface of the sheets. That is, preferably no image pattern for adhesion is formed on the surface (second surface) of the sheet that forms the surface of the sheet bundle that can constitute the cover of the booklet.

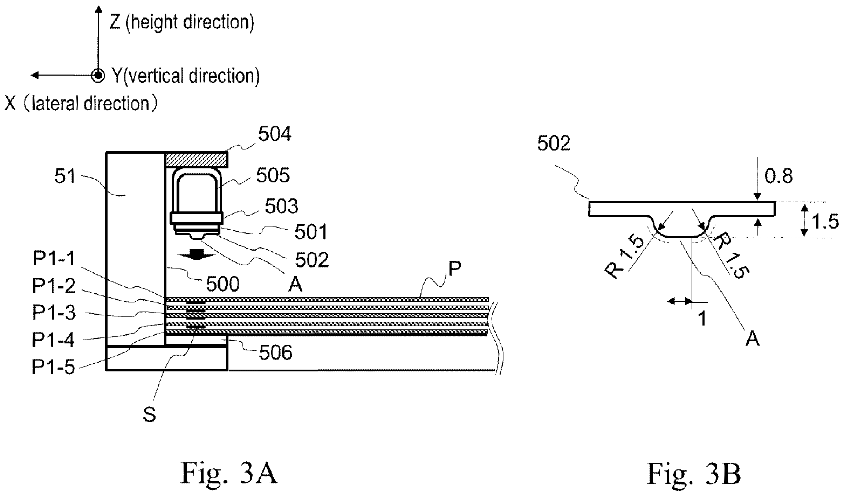

The structure of the thermocompression adhesion unit 51 will be further explained now. FIG. 3A is a cross-sectional diagram of the thermocompression adhesion unit 51, wherein a heating plate 502 made of aluminum is disposed on a ceramic heater 501 that has in turn a built-in heating element as a heat source of the thermocompression adhesion unit 51. In the below-described examples, the dimensions of the ceramic heater include a thickness of 1.0 mm, a width of 8.0 mm and a length of 350 mm. The ceramic heater 501 can be controlled to an arbitrarily set temperature by a temperature detection means and by a power application means that are supported by a heater support 503, not shown.

In the below-described examples, the set temperature is adjusted so that the surface temperature of a pressure section A of the heating plate 502 is 200°C. By providing thus the pressure section A on the heating plate 502, heat and pressure from the thermocompression adhesion unit 51 become concentrated only at the site at which the image patterns for adhesion are present, namely at a binding position of the sheet bundle, such that heating and pressing can be performed efficiently. The ceramic heater is supported by the heater support 503 made of a resin.

The degree of heating and pressing may be modified as appropriate depending on the melting characteristics of the toner. For instance the lowest temperature of the image pattern for adhesion may be preferably set to lie in the range of 75 to 100°C, more preferably 78 to 90°C. The surface temperature at the pressure section A may be for instance set to lie in the range of 180 to 240°C.

A pressing lever 504 receives power from a drive source, not shown, for the purpose of pushing down the thermocompression adhesion unit 51 in the -Z direction (downward), and thereby apply a pressing force to the sheet bundle. The pressing force of the pressing lever 504 is transmitted via a metal stay 505 as a rigid body. In the below-described examples, the pressing lever 504 applies a pressing force to the sheet bundle P, at a total pressure of 30 kgf. The reference symbol 506, which is a pressing plate made of silicone rubber and having a thickness of 2.0 mm, is a member for stably receiving a pressing force. The total pressure on the sheet bundle P is preferably 25 to 50 kgf, more preferably 28 to 40 kgf, so long as the pressure at the time of pressing allows forming a sheet bundle.

In the below-described examples, the thermocompression adhesion unit 51 presses the sheet bundle for 2 seconds, and thereafter moves off the pressed sheet bundle. An adhesion process may be carried out in which up to five sheets P having basis weight of up to 90 g/m$^2$ are adhered together at a time. FIG. 3B illustrates the cross-sectional shape of the heating plate 502; in the below-described examples, the pressure section A has a 1.0 mm flat portion and a curved portion with curvature, R, of 1.5, on either side of the flat portion. The length of the heating plate 502 in the Y direction is 300 mm.

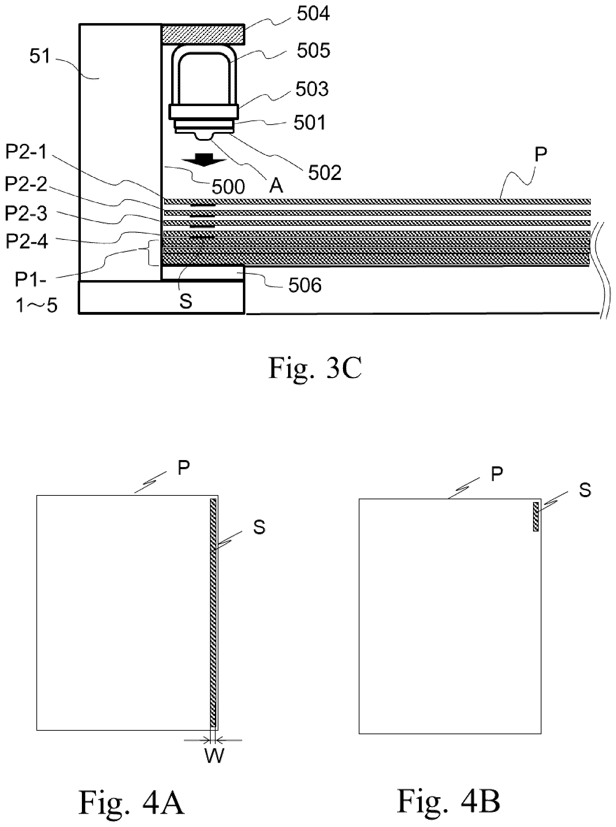

As illustrated in FIG. 3A, once an adhesion process by the thermocompression adhesion unit 51 is over (P1-1 to P1-5), the sheets P are thereafter sequentially laid up thereon (P2-1 to P2-4), as illustrated in FIG. 3C; thereupon, P1-1 to 5 and P2-1 to 4 may be adhered together. A deliverable can be produced as a result that includes a large number of booklets. In the below-described examples, a configuration is adopted in which a maximum of 50 booklets can be produced through supply of 5 sheets P the first time, and thereafter at most 4 sheets each time. During a continuous operation, the sheets P are supplied to the thermocompression adhesion unit 51; a booklet can thereupon be produced efficiently through repeated execution, by the thermocompression adhesion unit 51, of a descent operation, a pressing operation (for 2 seconds), and an ascent operation.

Once the adhesion process by the thermocompression adhesion unit 51 is complete, a bundle discharge guide, not shown, moves parallelly from a standby position towards a sheet discharge outlet 45, to thereby push the booklet out. Bundle discharge rollers 38 are provided at the sheet discharge outlet 45.

The bundle discharge guide stops at a position at which the leading edge of the booklet slightly juts beyond the bundle discharge rollers 38, and thereupon returns once again to the standby position. The bundle discharge rollers 38 discharge the booklet, having been handed over from the bundle discharge guide, onto the lower paper discharge tray 37.

FIG. 4A is a schematic diagram illustrating a print area S of an image pattern for adhesion that utilizes toners Ty, Tm, Tc, Tk, in a below-described example. As denoted by the hatched area, the print area S of the image pattern for adhesion is formed on a long edge of the sheet P, so that a long-edge bound booklet can be produced as a deliverable at the time of booklet production in a post-processing apparatus. In the below-described examples, the width W of the print area S of the image pattern for adhesion was set to 4.0 mm.

The shape of the print area S may be modified as appropriate so that a desired booklet is obtained. By forming the print area S of the image pattern for adhesion on part of the long side end, as illustrated in FIG. 4B, a deliverable can be produced in the form of a corner-bound booklet. In the below-described examples, the amount (laid-on level) of toner per unit area of each single color toner as used in the image pattern for adhesion was set to 0.4 mg/cm$^2$. For instance, the toner laid-on level on the sheet is preferably 0.3 to 1.5 mg/cm$^2$, more preferably 0.4 to 1.0 mg/cm$^2$, for both the first toner and the second toner.

Methods for measuring various physical properties in the present disclosure will be described next.

Method for Measuring a Calorific Value H

The calorific value H1 (J/g) of the first toner and the calorific value H2 (J/g) of the second toner are measured according to ASTM D3418-82, using a differential scanning calorimeter "Q1000" (by TA Instruments). The temperature at the detection unit of the instrument is corrected on the basis of the melting points of indium and zinc, and the amount of heat is corrected on the basis of the heat of fusion of indium.

Specifically, 3 mg of toner to be measured are weighed exactly and are placed on an aluminum pan. An empty aluminum pan is used as a reference. In the measurement, the temperature is raised at a rate of 10°C /min within a measurement temperature range of 20 to 180°C, is held at 180°C for 10 minutes, and is then cooled from 180°C down to 20°C at a cooling rate of 10°C /min. A baseline (a line connecting a 30°C plot and a 180°C plot of the resulting DSC curve) is drawn for the exothermic peak in the DSC curve in a temperature range of 30 to 180°C in the course of the above cooling (temperature-lowering process); the peak area in the range from 35°C to 75°C is taken as the calorific value H. The peak area is the integration value of the region wedged between the DSC curve and the baseline. Herein H1 denotes the calorific value H in the measurement of the first toner, and H2 denotes the calorific value H in the measurement of the second toner.

Method for Measuring a Content W of Hydrocarbon Wax in Toner

The content W of hydrocarbon wax per 100 parts by mass of a binder resin in the toner is calculated in accordance with the procedure below. Firstly, there are worked out the mass X1 of a tetrahydrofuran (THF)-soluble fraction of the toner, the mass X2 of an insoluble fraction, and an incineration ash fraction X3 of the insoluble fraction. The amount w of hydrocarbon wax in the toner is determined next. The amount R of binder resin in the toner is likewise determined. The content of hydrocarbon wax per 100 parts by mass of binder resin can be calculated on the basis of the above values of w and R.

Specifically, 1.5 g of toner are weighed exactly, are laid on cylindrical filter paper (product name: No. 86R, size 28×100 mm, by Advantec Toyo Kaisha, Ltd.) having been weighed exactly beforehand, and the whole is set in a Soxhlet extractor. Extraction is then performed for 20 hours using 200 mL of tetrahydrofuran (THF) as a solvent; extraction is conducted herein at a reflux rate such that there is one solvent extraction cycle once every 5 minutes. Once extraction is over, the cylindrical filter paper is retrieved and air-dried, and is then vacuum-dried at 40°C for 8 hours, and thereafter the mass of the cylindrical filter paper containing an extraction residue is weighed, and thereupon the mass of the extraction residue, calculated by subtracting the mass of the cylindrical filter paper, is taken as the mass X2 (g) of the tetrahydrofuran (THF)-insoluble fraction. The mass X1 (g) of the tetrahydrofuran (THF)-soluble fraction in the toner is given by Expression (A) below.

$$X1 = 1.5 - X2 \text{ (A)}$$

A content X3 (g) of a component other than a resin component is determined in accordance with the following procedure. Herein 1.5 g of toner are weighed exactly in a 30 mL magnetic crucible having had been weighed beforehand. The magnetic crucible is placed in an electric furnace, is heated at about 900°C for about 3 hours, is allowed to cool in the electric furnace, and to cool down in a desiccator at normal temperature for 1 hour or longer, and the mass of the crucible containing the incineration ash fraction is weighed; the incineration ash fraction X3 (g) is thereupon calculated by subtracting the mass of the crucible.

The extract obtained as a result of the above operation is filtered through a solvent-resistant membrane filter "MYSYORI DISC" (by Tosoh Corporation) having a pore diameter of 0.2 $\mu$m, to obtain a sample solution. Measurements are performed under the following conditions, using this sample solution.

Device: HLC8320 GPC (detector: RI) (by Tosoh Corporation)
Column: 2 columns Shodex LF-404, LF-404 (by Showa Denko KK)
Eluent: Tetrahydrofuran (THF)
Flow rate: 1.0 ml/min
Oven temperature: 40.0°C
Sample injection amount: 0.10 ml

Then there are measured a total area S of the obtained molecular weight distribution of the tetrahydrofuran (THF)-soluble fraction in the toner, and a peak area P1 derived from a hydrocarbon wax having a molecular weight corresponding to the wax identified in accordance with a below-described identification method of the molecular structure of a hydrocarbon wax comprised in the toner.

The amount w of hydrocarbon wax in the toner can be determined on the basis of Expression (B) below.

$$w=(X1{\times}P1/S)$$

$$=\{(1.5{\text -}X2){\times}P1/S\}...\ \ (B)$$

The total area S of the molecular weight distribution of the tetrahydrofuran (THF)-soluble fraction in the toner, and the surface area $P_W$ derived from the total wax, are obtained as a result of the above GPC, and then the amount R of the binder resin in the toner can be worked out on the basis of Expression (R) below.

$$R=\{X1+(X2{\text -}X3)\}{\text -}(X1{\times}P_W/S)...\ \ (R)$$

The content W of the hydrocarbon wax with respect to 100 parts by mass of the binder resin can then be worked out from the obtained amount w of the hydrocarbon wax and the obtained amount R of the binder resin.

Method for Identifying the Molecular Structure of a Hydrocarbon Wax in Toner

Firstly, a hydrocarbon wax is isolated from the toner in accordance with the following separation operation. The toner is dispersed in ethanol, which is a poor solvent of toner, and the temperature is raised to a temperature above the melting point of the wax. The above operation may be accomplished under reduced pressure, as needed. The wax that exceeds the melting point melts as a result of this operation, and is extracted in ethanol. When pressure is applied in addition to heating, the wax can then be separated from the toner by solid-liquid separation while under application of pressure.

The extract is next dried and solidified, to obtain wax. A hydrocarbon wax can then be isolated through sorting, by molecular weight, of the obtained wax.

The molecular structure of the isolated hydrocarbon wax is identified next. The molecular structure is identified using a pyrolysis-gas chromatography-mass spectrometer (hereafter referred to as pyrolysis-GC/MS) and NMR.

The following operations are specifically carried out.

(1) Herein 50 mg of toner are weighed exactly in an 8 mL glass sample bottle, and 1 mL of deuterated chloroform is added and the lid is closed, after which the resulting mixture is dispersed and dissolved for 1 hour using an ultrasonic disperser. The mixture is filtered using a membrane filter having a diameter of 0.4 $\mu$m, and the filtrate is recovered. The deuterated chloroform-insoluble fraction remains at that time on the membrane filter.

(2) Then a $^1$H-NMR measurement is performed on the filtrate, and the resulting spectrum is attributed to the constituent monomers of the hydrocarbon wax and ester wax, to work out quantitative values.

(3) An analysis by pyrolysis-GC/MS is then performed. A derivatization treatment such as methylation is performed as needed, and the molecular weight of the hydrocarbon wax is calculated.

<NMR measurement conditions>
Device: Bruker AVANCE 500 by Bruker Biospin Corporation
Measured nucleus: $^1$H
Measurement frequency: 500.1 MHz
Number of scans: 16 scans
Measurement temperature: room temperature
<Measurement Conditions of Pyrolysis-GC/MS>
Pyrolysis device: TPS-700 by Japan Analytical Industry Co., Ltd.
Pyrolysis temperature: appropriate value of 400°C up to 600°C
GC/MS device: ISQ by Thermo Fisher Scientific Inc.
Column: "HP5-MS" (Agilent/19091S-433), length 30 m, inner diameter 0.25 mm, film thickness 0.25 $\mu$m
<GC/MS conditions>
Inlet conditions:

Inlet temperature 250°C
Split flow: 50 mL/min
GC heating conditions: 40°C (5 min)$\to$10°C/min (300°C)$\to$300°C (20 min) Examples

The present disclosure will be explained in further detail hereafter by way of production examples and working examples, but these examples are not meant to limit the present disclosure in any way. Unless otherwise specified, the notations "parts" and "%" in the formulations of the examples and comparative examples refer to a mass basis in all instances.

Production of Toner 1

Preparation of Polymerizable Monomer Composition 1

- Styrene 60.0 parts
- Carbon black 10.0 parts

The above materials were charged into an attritor (by Nippon Coke & Engineering Co., Ltd.), and dispersion was carried out for 5.0 hours at 220 rpm, using zirconia particles having a diameter of 1.7 mm, after which the zirconia particles were removed, to obtain a colorant-dispersed solution having a pigment dispersed therein.
The materials below were added to the above colorant-dispersed solution.

- Styrene 15.0 parts
- n-butyl acrylate 20.0 parts
- Hexanediol diacrylate 0.5 part
- Polyester resin 4.0 parts
  (condensation polymerization product of terephthalic acid and a propylene oxide 2-mole adduct of bisphenol A; weight-average molecular weight Mw 10000; acid value 8.2 mgKOH/g)
- Hydrocarbon wax (melting point: 79°C) 5.0 parts
- Ethylene glycol distearate 15.0 parts

As a dissolution / dispersion step, the above materials were next kept warm at 65°C, and were dissolved and dispersed uniformly at 500 rpm using T. K. Homomixer, to prepare a polymerizable monomer composition.

Preparation of Aqueous Medium 1

Herein 11.2 parts of sodium phosphate (dodecahydrate) were charged into a reaction vessel containing 390.0 parts of ion-exchanged water, and the whole was kept warm at 65°C for 1.0 hour while under purging with nitrogen. Stirring was carried out at 12000 rpm using T. K. Homomixer (by Tokushu Kika Kogyo Co., Ltd.). While maintaining stirring, an aqueous solution of calcium chloride resulting from dissolution of 7.4 parts of calcium chloride (dihydrate) in 10.0 parts of ion-exchanged water was inputted to the reaction vessel all at once, to prepare an aqueous medium that contained a dispersion stabilizer. Then 1.0 mol/L hydrochloric acid was added to the aqueous medium in the reaction vessel, to adjust pH to 6.0 and prepare thus Aqueous medium 1.

Granulating Step

While the temperature of Aqueous medium 1 was maintained at 70°C and the rotational speed of the stirring device at 12500 rpm, the polymerizable monomer composition was inputted to Aqueous medium 1, with addition of 8.0 parts of t-butyl peroxypivalate as a polymerization initiator. Granulation was performed for 10 minutes while maintaining 12500 rpm in the stirring device as it was.

Polymerization Step

The high-speed stirring device was modified to a stirrer equipped with a propeller stirring blade, and polymerization was carried out for 5.0 hours by holding the temperature at 70°C and while under stirring at 200 rpm. A further polymerization reaction was conducted by further raising the temperature to 85°C, and by heating for 2.0 hours.
Residual monomers were removed by raising the temperature to 98°C and by heating for 3.0 hours. Thereafter, the temperature was lowered to 55°C, and this temperature was held for 5.0 hours while maintaining stirring. The temperature was then lowered to 25°C. Ion-exchanged water was added to adjust the concentration of the toner particle in the dispersion to 30.0 mass%, and obtain Toner particle dispersion 1 having Toner particle 1 dispersed therein.

Washing Step

Toner particle dispersion 1 was adjusted to pH of 1.5 using 1 mol/L hydrochloric acid, with stirring for 1.0 hour, followed by filtration while under washing with ion-exchanged water, and by drying, to obtain Toner particle 1.

Table 2 sets out the physical properties of the obtained Toner particle 1.

External Addition Step

To 100 parts of the obtained Toner particle 1 there were added 1.0 part of an external additive in the form of silica fine particles having been hydrophobized using dimethyl silicone oil (20 mass%) (number-average particle diameter of primary particles: 10 nm; BET specific surface area: 170 m$^2$/g), with mixing at 3000 rpm for 15 minutes using a Mitsui Henschel mixer (by Mitsui Miike Engineering Corporation), and as the result, the toner 1 was obtained. The jacket temperature of the Henschel mixer was set to 10°C, and the peripheral speed of the rotating blade was set to 38 m/sec.

Production of Toners 2 to 27

Toners 2 to 27 were obtained in the same way as Toner 1 but herein the type of colorant and the number of added parts of hydrocarbon wax were modified as given in Table 1. Table 2 sets out the physical properties of the obtained toner.

[Table 1]

| | Colorant | Hydrocarbon wax amount (parts) | Hydrocarbon wax amount (parts) per 100 parts of binder resin |
|---|---|---|---|
| Toner 1 | Carbon black | 5.0 | 5.2 |
| Toner 2 | C. I. Pigment Blue 15:3 | 5.0 | 5.2 |
| Toner 3 | C. I. Pigment Red 122 | 5.0 | 5.2 |
| Toner 4 | C. I. Pigment Blue 15:3 | 8.5 | 8.9 |
| Toner 5 | C. I. Pigment Blue 15:3 | 7.0 | 7.3 |
| Toner 6 | C. I. Pigment Blue 15:3 | 3.2 | 3.4 |
| Toner 7 | C. I. Pigment Blue 15:3 | 3.8 | 4.0 |
| Toner 8 | C. I. Pigment Blue 15:3 | 4.0 | 4.2 |
| Toner 9 | C. I. Pigment Blue 15:3 | 10.0 | 10.5 |
| Toner 10 | C. I. Pigment Blue 15:3 | 10.2 | 10.7 |
| Toner 11 | C. I. Pigment Blue 15:3 | 4.8 | 5.0 |
| Toner 12 | C. I. Pigment Blue 15:3 | 10.5 | 11.0 |
| Toner 13 | C. I. Pigment Blue 15:3 | 3.6 | 3.8 |
| Toner 14 | C. I. Pigment Blue 15:3 | 10.4 | 10.9 |
| Toner 15 | C. I. Pigment Blue 15:3 | 12.5 | 13.1 |
| Toner 16 | C. I. Pigment Blue 15:3 | 5.5 | 5.8 |
| Toner 17 | C. I. Pigment Yellow 155 | 10.7 | 11.2 |
| Toner 18 | C. I. Pigment Yellow 155 | 7.3 | 7.6 |
| Toner 19 | C. I. Pigment Yellow 155 | 9.0 | 9.4 |
| Toner 20 | C. I. Pigment Yellow 155 | 12.5 | 13.1 |
| Toner 21 | C. I. Pigment Yellow 155 | 12.2 | 12.8 |
| Toner 22 | C. I. Pigment Yellow 155 | 5.8 | 6.1 |
| Toner 23 | C. I. Pigment Yellow 155 | 5.5 | 5.8 |
| Toner 24 | C. I. Pigment Yellow 155 | 10.9 | 11.4 |
| Toner 25 | C. I. Pigment Yellow 155 | 5.3 | 5.5 |
| Toner 26 | C. I. Pigment Yellow 155 | 13.0 | 13.6 |
| Toner 27 | C. I. Pigment Yellow 155 | 10.0 | 10.5 |

[Table 2]

| | H (J/g) |
|---|---|
| Toner 1 | 5.0 |
| Toner 2 | 5.0 |
| Toner 3 | 5.0 |
| Toner 4 | 14.0 |
| Toner 5 | 10.0 |
| Toner 6 | 0.5 |
| Toner 7 | 2.0 |
| Toner 8 | 2.5 |
| Toner 9 | 17.5 |
| Toner 10 | 18.0 |
| Toner 11 | 4.0 |
| Toner 12 | 18.7 |
| Toner 13 | 1.5 |
| Toner 14 | 18.5 |
| Toner 15 | 24.0 |
| Toner 16 | 6.0 |
| Toner 17 | 19.5 |
| Toner 18 | 10.5 |
| Toner 19 | 15.0 |
| Toner 20 | 24.0 |
| Toner 21 | 23.5 |
| Toner 22 | 6.5 |
| Toner 23 | 6.0 |
| Toner 24 | 20.0 |
| Toner 25 | 5.5 |
| Toner 26 | 24.5 |
| Toner 27 | 18.0 |

In the table, H (J/g) denotes calorific value H.

Evaluation was performed using the above-described adhesion apparatus illustrated in FIG. 1. In Example 1, the process cartridge 7k was filled with toner 1 and the process cartridge 7y was filled with toner 18. No toner was filled in any cartridge other than those of two colors 7k and 7y. Examples 2 to 20 and Comparative examples 1 to 10 involved filling the process cartridge 7y, process cartridge 7m and process cartridge 7c with respective toners in the combinations given in Table 3. Similarly, in Examples 2 to 20 and Comparative examples 1 to 10 no toner was filled in, other than in the two color cartridges that contained the first toner and the second toner.

In the present embodiment the lowest toner temperature (temperature of the image pattern for adhesion) at the time of adhesion of at most 5 sheets at once, in the adhesion process of a sheet bundle by the thermocompression adhesion unit 51, was set to 80°C. In further detail, as illustrated in FIG. 3A, the surface temperature of the heating plate and the set temperature of the temperature detection means were set so that the toner temperature between P1-4 and P1-5 was 80°C, at the time of the adhesion process of P1-1 to P1-5 all at a time.

[Table 3]

| | | First Toner No. | Second Toner No. | H1 (J/g) | H2 (J/g) | H2-H1 |
|---|---|---|---|---|---|---|
| Example 1 | Toner set 1 | 1 | 17 | 5.0 | 19.5 | 14.5 |
| Example 2 | Toner set 2 | 2 | 17 | 5.0 | 19.5 | 14.5 |
| Example 3 | Toner set 3 | 3 | 17 | 5.0 | 19.5 | 14.5 |
| Example 4 | Toner set 4 | 4 | 17 | 14.0 | 19.5 | 5.5 |
| Example 5 | Toner set 5 | 2 | 18 | 5.0 | 10.5 | 5.5 |
| Example 6 | Toner set 6 | 5 | 19 | 10.0 | 15.0 | 5.0 |
| Example 7 | Toner set 7 | 6 | 20 | 0.5 | 24.0 | 23.5 |
| Example 8 | Toner set 8 | 6 | 21 | 0.5 | 23.5 | 23.0 |
| Example 9 | Toner set 9 | 7 | 20 | 2.0 | 24.0 | 22.0 |
| Example 10 | Toner set 10 | 8 | 21 | 2.5 | 23.5 | 21.0 |
| Example 11 | Toner set 11 | 9 | 21 | 17.5 | 23.5 | 6.0 |
| Example 12 | Toner set 12 | 6 | 22 | 0.5 | 6.5 | 6.0 |
| Example 13 | Toner set 13 | 10 | 20 | 18.0 | 24.0 | 6.0 |
| Example 14 | Toner set 14 | 6 | 23 | 0.5 | 6.0 | 5.5 |
| Example 15 | Toner set 15 | 8 | 22 | 2.5 | 6.5 | 4.0 |
| Example 16 | Toner set 16 | 7 | 23 | 2.0 | 6.0 | 4.0 |
| Example 17 | Toner set 17 | 9 | 24 | 17.5 | 20.0 | 2.5 |
| Example 18 | Toner set 18 | 11 | 22 | 4.0 | 6.5 | 2.5 |
| Example 19 | Toner set 19 | 10 | 17 | 18.0 | 19.5 | 1.5 |
| Example 20 | Toner set 20 | 12 | 17 | 18.2 | 19.5 | 1.3 |
| Comparative Example 1 | Comparative toner set 1 | 6 | 25 | 0.5 | 5.5 | 5.0 |
| Comparative Example 2 | Comparative toner set 2 | 13 | 25 | 1.5 | 5.5 | 4.0 |
| Comparative Example 3 | Comparative toner set 3 | 2 | 25 | 5.0 | 5.5 | 0.5 |
| Comparative Example 4 | Comparative toner set 4 | 13 | 26 | 1.5 | 24.5 | 23.0 |
| Comparative Example 5 | Comparative toner set 5 | 14 | 26 | 18.5 | 24.5 | 6.0 |
| Comparative Example 6 | Comparative toner set 6 | 6 | 26 | 0.5 | 24.5 | 24.0 |
| Comparative Example 7 | Comparative toner set 7 | 10 | 27 | 18.0 | 18.0 | 0.0 |
| Comparative Example 8 | Comparative toner set 8 | 15 | 20 | 24.0 | 24.0 | 0.0 |
| Comparative Example 9 | Comparative toner set 9 | 16 | 23 | 6.0 | 6.0 | 0.0 |
| Comparative Example 10 | Comparative toner set 10 | 10 | 23 | 18.0 | 6.0 | -12.0 |

Evaluation Results of Adhesion Strength

Table 4 sets out the evaluation results of adhesion strength of the toner sets of Examples 1 to 20 and Comparative examples 1 to 10 in Table 3.

The method for evaluating adhesion strength will be explained further on with reference to the schematic diagrams of FIGS. 5A and 5B. Firstly, five booklets were produced, as illustrated in FIG. 3A, using the adhesion apparatus and thermocompression adhesion unit 51 illustrated in FIG. 1. The image patterns for adhesion on the sheets P1-1 to P1-5 will be explained, with reference to FIG. 6, with P1-4 and P1-5 as representative portions. In FIG. 6, the first toner and second toner are laid up on the image pattern for adhesion (P1-5 side) of the sheet front surface, and similarly, the first toner and the second toner are laid up also on the image pattern for adhesion (P1-4 side) of the sheet back surface. The stacking order during the adhesion process is as illustrated in FIG. 6. Image patterns for adhesion are similarly formed between the other sheets. A booklet for strength testing, in one heating and pressure treatment, was produced by the thermocompression adhesion unit.

Thereafter, P1-1 to P1-3 were stripped off the obtained booklet, thereby obtaining a two-sheet SH booklet having only P1-4 and P1-5 adhered together. The two-sheet booklet made up of P1-4 and P1-5 was thereafter cut out as illustrated in FIG. 5A so as to have width (H) of 20 mm and a length (L) of 50 mm, and produce thus a test piece E including an adhered portion S.

Next, the P1-4 side of this test piece E was held by an upper holding member while the P1-5 side was held by a lower holding member, as illustrated in FIG. 5B. A digital force gauge M (by Nidec-Shimpo Corporation, FGP-2) was connected to the upper holding member. Thereafter, the digital force gauge was pulled up gradually, the peeling force at the time of peeling of the adhered portion S was measured using the digital force gauge, and a peak value of the peeling force was recorded. This measurement was performed five times, and the average value thereof was taken as the adhesion strength of the adhered portion S. An evaluation was carried out on the basis of the obtained adhesion strength, according to the criteria below.

Evaluation Criteria

A: adhesion strength of 1.50 N/cm or higher
B: adhesion strength from 1.25 N/cm to less than 1.50 N/cm
C: adhesion strength from 1.00 N/cm to less than 1.25 N/cm
D: adhesion strength lower than 1.00 N/cm

The reason for measuring the adhesion strength between P1-4 and P1-5 is that the foregoing are sites lying farther from a heating plate than other adhesion sites, and thus heat is not supplied as readily to P1-4 and P1-5, at which adhesion strength is accordingly more likely to be an issue.

The sheet P used in the present measurement was LTR size "Vitality Multipurpose Printer Paper (by Xerox) (279 mm$\times$216 mm), basis weight of 90 g/m$^2$".

Evaluation Results of Hot Offset Resistance

Table 4 sets out the results of the evaluation of the hot offset resistance of the toner sets of Examples 1 to 20 and Comparative examples 1 to 10 of Table 3.

The method for evaluating hot offset resistance involved using the above-described adhesion apparatus illustrated in FIG. 1. Evaluations were made in an environment at normal temperature and normal humidity (25°C/50% RH), at a process speed of 320 mm/sec, while varying the fixation temperature. The laid-on level the first toner and the laid-on level of the second toner were both set to 0.4 mg/cm$^2$, using the toner sets of Examples 1 to 20 and Comparative examples 1 to 10 in Table 3, to form thereby a solid image of the first toner and second toner so that the toner's laid-on level was 0.8 mg/cm$^2$. A fixing treatment was performed using the fixing apparatus 6 of the adhesion apparatus to obtain a respective fixed image. Plain paper (LETTER size XEROX 4200 paper, by XEROX Corporation, 75 g/m$^2$) was used as the transfer material. Hot offset resistance was evaluated visually on the above fixed image. Hot offset resistance was evaluated on the basis of the temperature at which hot offset occurred, in accordance with the criteria below.

Evaluation Criteria

A: No offset occurs at 210°C
B: Offset occurs at a temperature from 200°C to less than 210°C
C: Offset occurs at below 200°C

[Table 4]

| | | Adhesion strength (N/cm) | Evaluation rank of adhesion strength | Hot offset resistance | |
|---|---|---|---|---|---|
| | | | | Temperature at which hot offset occurred (°C) | Evaluation rank |
| Example1 | Toner set 1 | 2.02 | A | 211 | A |
| Example2 | Toner set 2 | 1.89 | A | 211 | A |
| Example3 | Toner set 3 | 1.88 | A | 211 | A |
| Example4 | Toner set 4 | 1.53 | A | 219 | A |
| Example5 | Toner set 5 | 1.62 | A | 217 | A |
| Example6 | Toner set 6 | 1.50 | A | 219 | A |
| Example7 | Toner set 7 | 2.22 | A | 202 | B |
| Example8 | Toner set 8 | 2.18 | A | 203 | B |
| Example9 | Toner set 9 | 2.15 | A | 204 | B |
| Example10 | Toner set 10 | 2.08 | A | 205 | B |
| Example11 | Toner set 11 | 1.54 | A | 219 | A |
| Example12 | Toner set 12 | 1.73 | A | 216 | A |
| Example13 | Toner set 13 | 1.50 | A | 219 | A |
| Example14 | Toner set 14 | 1.66 | A | 217 | A |
| Example15 | Toner set 15 | 1.43 | B | 219 | A |
| Example16 | Toner set 16 | 1.44 | B | 219 | A |
| Example17 | Toner set 17 | 1.19 | C | 222 | A |
| Example18 | Toner set 18 | 1.33 | B | 221 | A |
| Example19 | Toner set 19 | 1.11 | C | 223 | A |
| Example20 | Toner set 20 | 1.01 | C | 223 | A |
| Comparative Example 1 | Comparative toner set 1 | 1.71 | A | 195 | C |
| Comparative Example 2 | Comparative toner set 2 | 1.56 | A | 196 | C |
| Comparative Example 3 | Comparative toner set 3 | 1.20 | C | 199 | C |
| Comparative Example 4 | Comparative toner set 4 | 0.94 | D | 201 | B |
| Comparative Example 5 | Comparative toner set 5 | 0.70 | D | 219 | A |
| Comparative Example 6 | Comparative toner set 6 | 0.97 | D | 199 | C |
| Comparative Example 7 | Comparative toner set 7 | 0.81 | D | 224 | A |
| Comparative Example 8 | Comparative toner set 8 | 0.56 | D | 224 | A |
| Comparative Example 9 | Comparative toner set 9 | 0.95 | D | 223 | A |
| Comparative Example 10 | Comparative toner set 10 | 0.40 | D | 229 | A |

Evaluation Results of Hot Offset Resistance of the First Toner Alone

Table 5 sets out evaluation results of hot offset resistance of the first toner alone.

Hot offset resistance was evaluated in accordance with the below-described method, by modifying the process speed of the above-described adhesion apparatus illustrated in FIG. 1.

Process cartridges filled with toners 1, 2, 7, 10 and 13 used for evaluating adhesion strength were used at a process speed of 400 mm/sec in an environment at normal temperature and normal humidity (25°C /50% RH), to form a solid image (toner laid-on level: 0.4 mg/cm$^2$), with modification of the fixation temperature. Plain paper (LETTER size XEROX 4200 paper, by XEROX Corporation, 75 g/m$^2$) was used as the transfer material. Hot offset resistance was evaluated visually. Hot offset resistance was evaluated on the basis of the temperature at which hot offset occurred, in accordance with the criteria below.

Evaluation Criteria

A: No offset occurs at 210°C
B: Offset occurs at a temperature from 200°C to less than 210°C
C: Offset occurs at below 200°C

[Table 5]

| | Hot offset resistance | |
|---|---|---|
| | Temperature at which hot offset occurred (°C) | Evaluation rank |
| Toner 1 | 205 | B |
| Toner 2 | 207 | B |
| Toner 7 | 202 | B |
| Toner 10 | 214 | A |
| Toner 13 | 196 | C |

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

**1.** An adhesion method, comprising:

a step of forming a first unfixed toner layer using a first toner, on a first surface of a sheet;
a step of forming a second unfixed toner layer using a second toner, on the first unfixed toner layer;
a step of forming an image pattern for adhesion on the sheet, by performing heating from a surface of the second unfixed toner layer to fix the first unfixed toner layer and the second unfixed toner layer to the sheet; and
a step of adhering the sheets to obtain an adhered product, by performing heating in a stacked configuration of the image pattern for adhesion formed on a same sheet or a different sheet, wherein
the image pattern for adhesion has, on a surface thereof, a fixed toner image derived from the second unfixed toner layer, and
when H1 (J/g) denotes a calorific value of the first toner and H2 (J/g) denotes a calorific value of the second toner, the H1 and the H2 satisfy Expressions (1) and (2) below:

$$6.0 \leq H2 \leq 24.0 ... \ (1)$$

$$H1<H2... \quad (2)$$

where the H1 and the H2 each are a calorific value in a range from 35°C to 75°C of an exothermic peak in a DSC curve obtained in a cooling step (ii) below, upon execution of:

(i) a temperature raising step of raising a temperature from 20°C to 180°C at a rate of 10°C/min, and
(ii) a cooling step of holding at 180°C for 10 minutes, followed by cooling from 180°C down to 20°C at a rate of 10°C/min.

2. The adhesion method according to claim 1, comprising
a step of adhering the sheets to obtain the adhered product, by performing heating in a stacked configuration of the fixed toner image of the image pattern for adhesion formed on different sheets.

3. The adhesion method according to claim 1 or 2, wherein a value (H2-H1) of a difference between the H2 and the H1 is 1.5 (J/g) or more.

4. The adhesion method according to any one of claims 1 to 3, wherein the H1 is 2.0 to 18.0 (J/g).

5. The adhesion method according to any one of claims 1 to 4, wherein the first toner and the second toner comprise a wax.

6. The adhesion method according to any one of claims 1 to 5, wherein the first toner is a black toner comprising a carbon black.

7. A toner set used in an adhesion method,

the adhesion method comprising:

a step of forming a first unfixed toner layer using a first toner, on a first surface of a sheet;
a step of forming a second unfixed toner layer using a second toner, on the first unfixed toner layer;
a step of forming an image pattern for adhesion on the sheet, by performing heating from a surface of the second unfixed toner layer to fix the first unfixed toner layer and the second unfixed toner layer to the sheet; and
a step of adhering the sheets to obtain an adhered product, by performing heating in a stacked configuration of the image pattern for adhesion formed on a same sheet or a different sheet,

the toner set comprises the first toner and the second toner separately, wherein
the image pattern for adhesion has, on a surface thereof, a fixed toner image derived from the second unfixed toner layer, and
when H1 (J/g) denotes a calorific value of the first toner and H2 (J/g) denotes a calorific value of the second toner, the H1 and the H2 satisfy Expressions (1) and (2) below:

$$6.0 \leq H2 \leq 24.0... \quad (1)$$

$$H1<H2... \quad (2)$$

where the H1 and the H2 each are a calorific value in a range from 35°C to 75°C of an exothermic peak in a DSC curve obtained in a cooling step (ii) below, upon execution of:

(i) a temperature raising step of raising a temperature from 20°C to 180°C at a rate of 10°C/min, and
(ii) a cooling step of holding at 180°C for 10 minutes, followed by cooling from 180°C down to 20°C at a rate of 10°C/min.

8. The toner set according to claim 7, wherein a value (H2-H1) of a difference between the H2 and the H1 is 1.5 (J/g) or more.

9. The toner set according to claim 7 or 8, wherein the H1 is 2.0 to 18.0 (J/g).

10. The toner set according to any one of claims 7 to 9, wherein the first toner is a black toner comprising a carbon black.

11. An adhesion apparatus, comprising:

means for forming a first unfixed toner layer using a first toner, on a first surface of a sheet;
means for forming a second unfixed toner layer using a second toner, on the first unfixed toner layer;
means for forming an image pattern for adhesion on the sheet, by performing heating from a surface of the second unfixed toner layer to fix the first unfixed toner layer and the second unfixed toner layer to the sheet; and
means for adhering the sheets to obtain an adhered product, by performing heating in a stacked configuration of the image pattern for adhesion formed on a same sheet or a different sheet, wherein
the image pattern for adhesion has, on a surface thereof, a fixed toner image derived from the second unfixed toner layer, and
when H1 (J/g) denotes a calorific value of the first toner and H2 (J/g) denotes a calorific value of the second toner, the H1 and the H2 satisfy Expressions (1) and (2) below:

$$6.0 \leq H2 \leq 24.0 \dots \ (1)$$

$$H1 < H2 \dots \ (2)$$

where the H1 and the H2 each are a calorific value in a range from 35°C to 75°C of an exothermic peak in a DSC curve obtained in a cooling step (ii) below, upon execution of:

(i) a temperature raising step of raising a temperature from 20°C to 180°C at a rate of 10°C/min, and
(ii) a cooling step of holding at 180°C for 10 minutes, followed by cooling from 180°C down to 20°C at a rate of 10°C/min.

12. A method for producing an adhered product, the method comprising:

a step of forming a first unfixed toner layer using a first toner, on a first surface of a sheet;
a step of forming a second unfixed toner layer using a second toner, on the first unfixed toner layer;
a step of forming an image pattern for adhesion on the sheet, by performing heating from a surface of the second unfixed toner layer to fix the first unfixed toner layer and the second unfixed toner layer to the sheet; and
a step of adhering the sheets to obtain an adhered product, by performing heating in a stacked configuration of the image pattern for adhesion formed on a same sheet or a different sheet, wherein
the image pattern for adhesion has, on a surface thereof, a fixed toner image derived from the second unfixed toner layer, and
when H1 (J/g) denotes a calorific value of the first toner and H2 (J/g) denotes a calorific value of the second toner, the H1 and the H2 satisfy Expressions (1) and (2) below:

$$6.0 \leq H2 \leq 24.0 \dots \ (1)$$

$$H1 < H2 \dots \ (2)$$

where the H1 and the H2 each are a calorific value in a range from 35°C to 75°C of an exothermic peak in a DSC curve obtained in a cooling step (ii) below, upon execution of:

(i) a temperature raising step of raising a temperature from 20°C to 180°C at a rate of 10°C/min, and
(ii) a cooling step of holding at 180°C for 10 minutes, followed by cooling from 180°C down to 20°C at a rate of 10°C/min.

13. An adhesion method, comprising:

a step of forming a first unfixed toner layer using a first toner, on a first surface of a sheet;
a step of forming a second unfixed toner layer using a second toner, on the first unfixed toner layer;

a step of forming an image pattern for adhesion on the sheet, by performing heating from a surface of the second unfixed toner layer to fix the first unfixed toner layer and the second unfixed toner layer to the sheet; and a step of adhering the sheets to obtain an adhered product, by performing heating in a stacked configuration of the image pattern for adhesion formed on a same sheet or a different sheet, wherein the image pattern for adhesion has, on a surface thereof, a fixed toner image derived from the second unfixed toner layer,
the first toner and the second toner comprise a hydrocarbon wax, and
when W1 (parts by mass) denotes a content of wax per 100 parts by mass of a binder resin in the first toner and W2 (parts by mass) denotes a content of wax per 100 parts by mass of a binder resin in the second toner, the W1 and the W2 satisfy Expressions (3) and (4) below:

$$5.8 \leq W2 \leq 13.1 ... \quad (3)$$

$$W1 < W2 ... \quad (4).$$

Fig.1

X (lateral direction)

Z (height direction)

Y (vertical direction)

P

29

42

41a

41a

41a

500

51

39  40  39  39

Fig. 2A

X (lateral direction)

Z (height direction)

Y (vertical direction)

P

29

42

41a

41a

41a

500

51

39  40  39  39

Fig. 2B

EP 4 495 694 A1

X (lateral direction)

Z (height direction)

Y (vertical direction)

Fig. 2C

X (lateral direction)

Z (height direction)

Y (vertical direction)

Fig. 2D

Z (height direction)

Y (vertical direction)

X (lateral direction)

504

51

505

503

501

502

P

P1-1
P1-2
P1-3
P1-4
P1-5

500

A

506

S

**Fig. 3A**

502

0.8

1.5

R1.5

R1.5

1

A

**Fig. 3B**

EP 4 495 694 A1

51

504
505
503
501
502

P2-1
P2-2
P2-3
P2-4
500  A

P1-
1~5

S

506

P

## Fig. 3C

P

S

W

## Fig. 4A

P

S

## Fig. 4B

Fig. 5A

Fig. 5B

Fig. 6

| | Europäisches Patentamt |
|---|---|
| | European Patent Office |
| | Office européen des brevets |

# EUROPEAN SEARCH REPORT

**Application Number**

EP 24 18 4901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2013 043751 A (RICOH CO LTD) 4 March 2013 (2013-03-04) | 11 | INV. G03G9/087 |
| A | * paragraphs [0027], [0038], [0046], [0052] * * figures 6,9 * * claim 1 * | 1-10,12, 13 | |

TECHNICAL FIELDS SEARCHED (IPC)

G03G
B65H
B42B
B42C

The present search report has been drawn up for all claims

| Place of search | Date of completion of the search | Examiner |
|---|---|---|
| The Hague | 3 December 2024 | Queste, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 495 694 A1**

## ANNEX TO THE EUROPEAN SEARCH REPORT
## ON EUROPEAN PATENT APPLICATION NO.

EP 24 18 4901

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2024

| Patent document cited in search report | Publication date | Patent family member(s) | Publication date |
|---|---|---|---|
| JP 2013043751 A | 04-03-2013 | JP 2013043751 A | 04-03-2013 |
| | | US 2013051886 A1 | 28-02-2013 |

EPO FORM P0459

For more details about this annex : see Official Journal of the European Patent Office, No. 12/82

**EP 4 495 694 A1**

**Patent documents cited in the description**

- JP 2004209858 A